# EUROPÄISCHE PATENTSCHRIFT

(11) **EP 2 163 170 B1**
(45) Veröffentlichungstag und Bekanntmachung des Hinweises auf die Patenterteilung: **25.04.2012**
(21) Anmeldenummer: 09405121.6
(22) Anmeldetag: 22.07.2009
(51) Int. Cl.: A47B 13/02, A47B 87/00, F16B 12/40, A47B 21/06

(54) **Tischkonstruktion**
Table construction
Construction de table

(30) Priorität: 10.09.2008 DE 202008012023 U
(43) Veröffentlichungstag der Anmeldung: 17.03.2010
(73) Patentinhaber: Vitra Patente AG, 4132 Muttenz (CH)
(72) Erfinder: Schütt, Helmut, 79379 Müllheim (DE); Löffler, Jürgen, 79282 Ballrechten-Dottingen (DE)
(74) Vertreter: Ullrich, Gerhard

(56) Entgegenhaltungen:
- DE-A1- 2 902 307
- DE-U1-202006 006 793

## Beschreibung

### Anwendungsgebiet der Erfindung

Die vorliegende Erfindung bezieht sich auf eine Tischkonstruktion mit einer von einem Untergestell getragenen Tischplatte. Das Untergestell setzt sich aus Beinen und Streben zusammen, die mittels dazwischen gefügten Verbindern aneinander befestigt sind. Die Konstruktion erlaubt den baukastenartigen Aufbau verschieden konfigurierter Tischgrössen und -formen.

### Stand der Technik

In der EP 0 443 111 A1 ist ein zwischen einer Säule und einer Strebe eingesetztes Verbindungselement offenbart, das im wesentlichen aus zwei Backen sowie einer diese durchragenden Schraube besteht. Die in der Strebe durch die Schraube gehaltenen Backen besitzen an ihren Stirnflächen krallen- bzw. hakenartige Fortsätze, welche in an der Säule vorhandene Nuten eingreifen und durch Anziehen der Schraube darin verklemmen. Damit wird das Verbindungselement zwischen der Säule und der Strebe fixiert.

Gegenstand der CH 687 665 A5 ist eine Gestellkonstruktion mit mehreren Stäben, die mittels Knotenelementen verbunden sind. Das Knotenelement weist sechs Bohrungen auf, die jeweils mit einem Innengewinde versehen sind. Fünf der sechs Bohrungen liegen auf drei zueinander paarweise senkrecht stehenden Hauptachsen. Die sechste Bohrung verläuft auf einer von den Hauptachsen verschiedenen Achse, die in einer durch zwei Hauptachsen aufgespannten Ebene liegt und dabei zur verbleibenden Hauptachse einen Winkel von 15° einschliesst. In einen hohlzylindrischen Stab sind Spreizelemente einsetzbar, die durch zwei ineinandergreifende keilförmige Hälften im Stab verspannt werden. Das Spreizelement hat ein Aussengewinde, das mit dem Innengewinde am Knotenelement in Eingriff steht, womit die Gestellkonstruktion untereinander verbunden ist. Durch die sechste Bohrung lassen sich runde Gestellaufbauten errichten.

In der DE 26 44 370 A1 ist eine Verbindung gezeigt, die zur Befestigung einer Stange an einem Eckstück dient. Das Eckstück hat die Form eines Würfels, wobei an jeder der sechs Seiten eine zentrische Gewindebohrung und ein umlaufender Kragen vorhanden sind. Ein Klemmorgan ist mittels einer leicht angezogenen Schraube an jeder der Seiten des Eckstücks fixierbar, wobei das Klemmorgan mit seiner Grundplatte vom Kragen des Eckstücks umfasst wird und gegen unbeabsichtigtes Verdrehen gesichert ist. Das Klemmorgan besteht aus zwei Spreizflügeln, die in Form einer schiefen Ebene aneinander liegen. Die Stange wird über das Klemmorgan geschoben, bis diese am Eckstück anliegt, anschliessend wird mittels der nun stärker anzuziehenden Schraube, welche die Spreizflügel auseinander drückt, die sich an der Innenseite der Stange verkeilen, die Verbindung zwischen Stange und Eckstück hergestellt.

Die Tischkonstruktion gemäss der WO 2005/120288 A1 umfasst einen Rahmen mit mindestens vier Basisstreben, die ein Tischfeld bilden und in den Eckbereichen des Rahmens paarweise zusammentreffen und dort mittels Verbindern aneinander befestigt sind. Am Rahmen werden die Füsse lösbar anmontiert. Auf den Rahmen werden eine oder mehrere Tischplatten aufgesetzt. Die Verbinder werden von Eckwinkeln gebildet, die aus zwei rechtwinklig zueinander angeordneten Seitenschenkeln bestehen, welche die aufgeschobenen Enden der Basisstreben aufnehmen. An den Eckwinkeln sind zugleich die oberen Enden der den Rahmen tragenden Füsse befestigt.

In der DE 20 2006 006 793 U1 sind ein Quer- und Kreuzverbinder für drei oder vier auf gleicher Höhe zusammentreffende Tischgestellkomponenten mit viereckigem Profil sowie eine lösbare Quer- und Kreuzverbindung von drei oder vier auf gleicher Höhe zusammentreffenden Tischgestellkomponenten mit viereckigem Profil offenbart.

Gegenstand der DE 29 02 307 A1 ist eine Knotenpunktverbindung an Tischgestellen für mit ihren Stirnflächen an den Wänden des Verbindungskörpers angesetzte und dort mit den Wänden verschraubte Stäbe. Der Verbindungskörper hat vier rechtwinklig zueinander stehende Wände. Ferner ist eine aufklipsbare, winkelförmig gestaltete Abdeckkappe vorgesehen, deren Flächen zusammen mit dem Verbindungskörper einen Würfel bilden.

### Aufgabe der Erfindung

Der Erfindung liegt die Aufgabe zugrunde, eine Tischkonstruktion vorzuschlagen, die modular in Länge und Breite beliebig erweiterbar ist. Die Anzahl der dazu nötigen Teile und der Montageaufwand sollen möglichst gering sein. Der Aufbau soll ohne spezielles Werkzeug durchführbar sein. Schliesslich muss die Tischkonstruktion eine Serienfertigung zu effizienten Kosten erlauben.

### Übersicht über die Erfindung

Die Tischkonstruktion ist in Anspruch 1 definiert und umfasst zunächst ein Untergestell, das sich aus Beinen und optionalen Streben zusammensetzt, sowie eine vom Untergestell getragene Tischplatte und zumindest einen Verbinder, an dem die Beine und optionalen Streben befestigt sind. Ein Bein hat ein sich abwärts erstreckendes Fussteil, an dessen unterem Ende ein erster Anschluss angeordnet ist. Vom oberen Ende des Fussteils des Beins geht ein Querteil ab, das zur Anordnung unterhalb der Tischplatte bestimmt ist und an seinem freien Ende einen zweiten Anschluss aufweist. Eine Strebe besitzt an beiden Enden je einen Anschluss. Der Verbinder ist von quaderförmiger Gestalt, der vier Seitenflächen hat, die zum Befestigen von zweiten Anschlüssen von Beinen und von Streben dienen.

Die nachfolgenden Merkmale beziehen sich auf spezielle Ausführungen der Erfindung: Ein Adapter ist vorgesehen, der sich mit dem ersten Anschluss des Fussteils oder mit einem ersten Anschluss eines Verlängerungsteils zusammenfügen lässt. Der erste Anschluss des Verlängerungsteils lässt sich alternativ mit einem zweiten Anschluss der Strebe zusammenfügen. Das Verlängerungsteil weist einen zweiten Anschluss auf, der sich mit dem ersten Anschluss des Fussteils oder mit einer Seitenfläche des Verbinders zusammenfügen lässt. Die Beine, die Streben und die Verlängerungsteile bestehen aus Vierkanthohlprofil mit identischem Querschnitt. Das Verlängerungsteil hat einen durchgehenden Hohlraum.

Der erste Anschluss am Bein wird von einer das Ende des Fussteils umlaufenden Kante gebildet, von der sich in fortsetzender Längsrichtung des Fussteils Nasen erstrecken. Der zweite Anschluss am Bein wird von einer das Ende des Querteils umlaufenden Kante gebildet, von der sich in rückläufiger Längsrichtung des Querteils Kerben erstrecken. Die zweiten Anschlüsse an der Strebe werden jeweils von einer das betreffende Ende der Strebe umlaufenden Kante gebildet, von der sich in rückläufiger Längsrichtung der Strebe Kerben erstrecken. Der erste Anschluss am Verlängerungsteil wird von einer das Ende des Verlängerungsteils umlaufenden Kante gebildet, von der sich in fortsetzender Längsrichtung des Verlängerungsteils Nasen erstrecken. Der zweite Anschluss am Verlängerungsteil wird von einer das Ende des Verlängerungsteils umlaufenden Kante gebildet, von der sich in rückläufiger Längsrichtung des Verlängerungsteils Kerben erstrecken.

Der Verbinder hat ausser den vier Seitenflächen eine Grundfläche und eine dazu gegenüber liegende Offenseite. Die Seitenflächen weisen ein zentrisches drittes Durchgangsloch und äusserlich je eine umlaufende Nut auf, welche von erhabenen Stegen unterbrochen wird. Die Nut dient der Aufnahme der Kante des zweiten Anschlusses am Querteil des Beins oder der Kante des Anschlusses der Strebe oder der Kante des zweiten Anschlusses des Verlängerungsteils. Im zusammengebauten Zustand kommen die Stege in den Kerben des zweiten Anschlusses am Querteil des Beins oder in den Kerben eines zweiten Anschlusses der Strebe oder in den Kerben des zweiten Anschlusses des Verlängerungsteils formschlüssig zu liegen. Das dritte Durchgangsloch wird von einem Gewindebolzen durchragt, der innerlich des Verbinders mit einer Mutter versehen ist und nach aussen in ein Innengewinde am zweiten Anschluss am Querteil des Beins oder am Anschluss der Strebe eingreift.

Das Innengewinde ist am zweiten Anschluss am Querteil des Beins und an den zweiten Anschlüssen der Strebe an einem Boden vorgesehen, der einen nach aussen mündenden Hohlraum am Querteil bzw. an der Strebe begrenzt. In der Grundfläche des Verbinders sind zumindest ein erstes Durchgangsloch und optional zweite Durchgangslöcher vorhanden, die sich zum Anbringen von Trägern oder Behältnissen nutzen lassen, z.B. für eine CPU, oder zur Montage eines Stützfusses.

Der Adapter besitzt einen Sockel mit einer umlaufenden Schulter, von der sich Kerben in den Sockel hinein erstrecken. Auf der Schulter des Sockels sitzt die Kante am ersten Anschluss des Fussteils des Beins oder die Kante am ersten Anschluss des Verlängerungsteils auf. Die Nasen am ersten Anschluss des Fussteils des Beins oder die Nasen am ersten Anschluss des Verlängerungsteils greifen in die Kerben im Sockel formschlüssig ein.

Vom Sockel des Adapters erhebt sich zentrisch ein Schaft. Der Schaft hat innerlich einen Sitz, von dem sich ein Durchgangsloch erstreckt, das am freien Ende des Schafts mündet, und vom Sitz erstreckt sich ein Innengewinde, das am Sockel mündet. In das Innengewinde ist ein höhennivellierbares Bodenelement mit seinem Gewindestift eindrehbar. Im Sitz des Schafts kommt ein Kopf einer Schraube zu liegen, deren Gewindebolzen das Durchgangsloch im Schaft durchragt und in ein Innengewinde am ersten Anschluss des Fussteils des Beins eingreift. Das Innengewinde am ersten Anschluss des Fussteils des Beins ist an einem Boden vorgesehen, der einen nach aussen mündenden Hohlraum am Fussteil begrenzt. Im Hohlraum am Fussteil oder bei Verwendung eines am Fussteil angesetzten Verlängerungsteils kommt in dessen durchgehenden Hohlraum der Schaft des Adapters zu liegen.

Zwei in einer Ebene zueinander beabstandet positionierte Beine, deren Querteile voneinander wegweisend fluchten, bilden mit einem Mittelteil, das vorzugsweise in der Flucht der Querteile eingefügt ist, ein Doppelbein. Zum Zusammenbau eines Doppelbeins kann das Mittelteil an seinen beiden Enden mit jeweils einem Brückenteil als Verbindung zum Eckbereich von Fussteil und Querteil des jeweils zugeordneten Beins versehen sein. Als Abschnitte der Strebe sind Strebenfortsätze und Stützteile vorgesehen, die nur an einem Ende den zweiten Anschluss mit der Kante, dem Hohlraum, den Kerben, dem Boden und dem Innengewinde zum Befestigen an einer Seitenfläche am Verbinder aufweisen.

Zur Fixierung der Tischplatte auf dem Untergestell sind Befestigungselemente vorgesehen. Die Befestigungselemente sind mittels Schrauben einerseits auf einer Oberseite der Querteile der Beine bzw. der Streben und andererseits an der Unterseite von Tischplatte oder Anbauplatte fixiert. Zur Verbindung zwischen den Befestigungselementen und den Querteilen der Beine und/oder den Streben und/oder den Strebenfortsätzen sind auf den Oberseiten von Querteilen, Streben und Strebenfortsätzen Schlitze angeordnet, in die sich an den Befestigungselementen vorhandene Nasen einhängen lassen.

Die Tischplatte hat einen Durchbruch, in welchen ein Verkabelungszugang eingesetzt ist, der zu öffnende Klappensegmente besitzt, um an die Kabelhalterungen und eine eventuelle Steckdoseneinheit zu gelangen. Am Verkabelungszugang sind Andockkonturen - z.B. Sacklöcher - vorhanden, um darin die Arretierorgane - z.B. Stifte - eines auf die Tischplattenoberseite aufsetzbaren Screens und/oder von Gerätehalterungen einzustecken. Der Screen schirmt den Arbeitsplatz ab und ist zugleich zum Anbringen von kleinen Behältnissen, Halterungen für Utensilien und Geräte oder Merkzetteln nutzbar. Unterhalb der Tischplatte, die sich mit Anbauplatten verlängern lässt, können Kabelhalterungen in Gestalt von Körben, Bändern, Netzen oder Haken angeordnet sein. Die Tischkonstruktion kann mit einer senkrecht stehenden Abschirmung ergänzt werden, die sich an aussen liegenden Verbindern befestigen lässt.

### Kurzbeschreibung der beigefügten Zeichnungen

Es zeigen:
- Figur 1A -: eine erfindungsgemässe Tischkonstruktion mit rechteckiger Tischplatte und Untergestell, in Perspektivansicht von oben;
- Figur 1B -: den Aufbau gemäss Figur 1A, in Perspektivansicht von unten;
- Figur 1C -: den Aufbau gemäss Figur 1A, mit verlängerten Beinen, in Pers- pektivansicht von oben;
- Figur 1D -: den Aufbau gemäss Figur 1C, in Perspektivansicht von unten;
- Figur 2A -: einen Aufbau gemäss dem Prinzip nach Figur 1A mit einer An- bauplatte, in Perspektivansicht von oben;
- Figur 2B -: den Aufbau gemäss Figur 2A, in Perspektivansicht von unten;
- Figur 3A -: einen Aufbau gemäss dem Prinzip nach Figur 1A mit einem Doppelbein, in Perspektivansicht von oben;
- Figur 3B -: den Aufbau gemäss Figur 3A, in Perspektivansicht von unten;
- Figur 3C -: den Aufbau gemäss Figur 3B mit in der Mitte angeordneten einfachen Beinen, in Perspektivansicht von unten;
- Figur 4A -: einen Aufbau gemäss dem Prinzip nach Figur 1A mit runder Tischplatte, in Perspektivansicht von oben;
- Figur 4B -: den Aufbau gemäss Figur 4A, in Perspektivansicht von unten;
- Figur 4C -: den Aufbau gemäss Figur 4B mit veränderter Beinanordnung, in Perspektivansicht von unten;

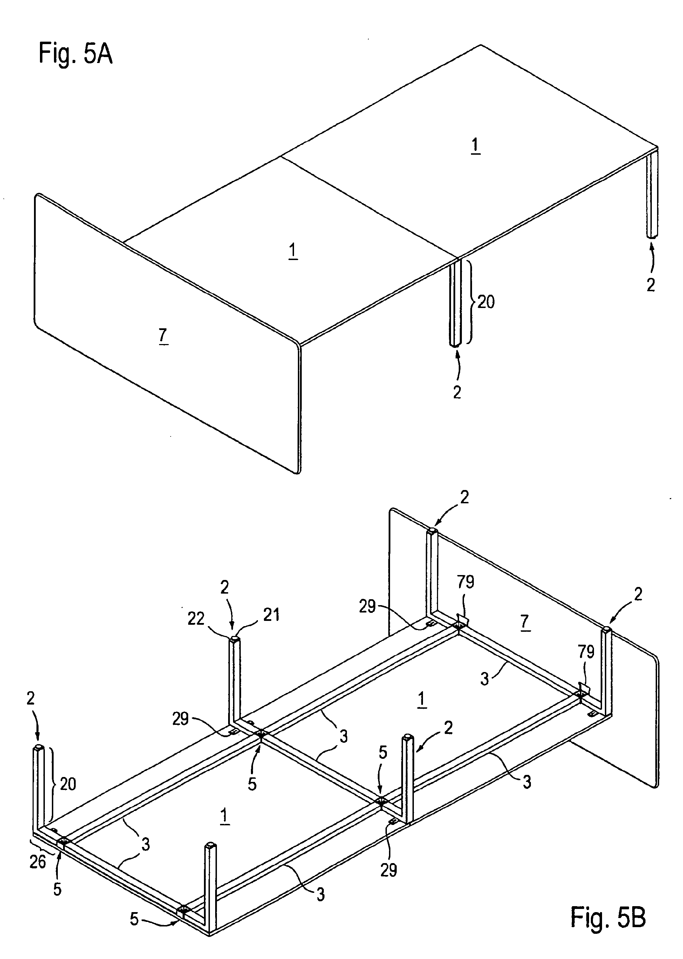

- Figur 5A -: den Aufbau gemäss Figur 3C, mit seitlicher Abdeckung, in Per- spektivansicht von oben;
- Figur 5B -: den Aufbau gemäss Figur 5A, in Perspektivansicht von unten;

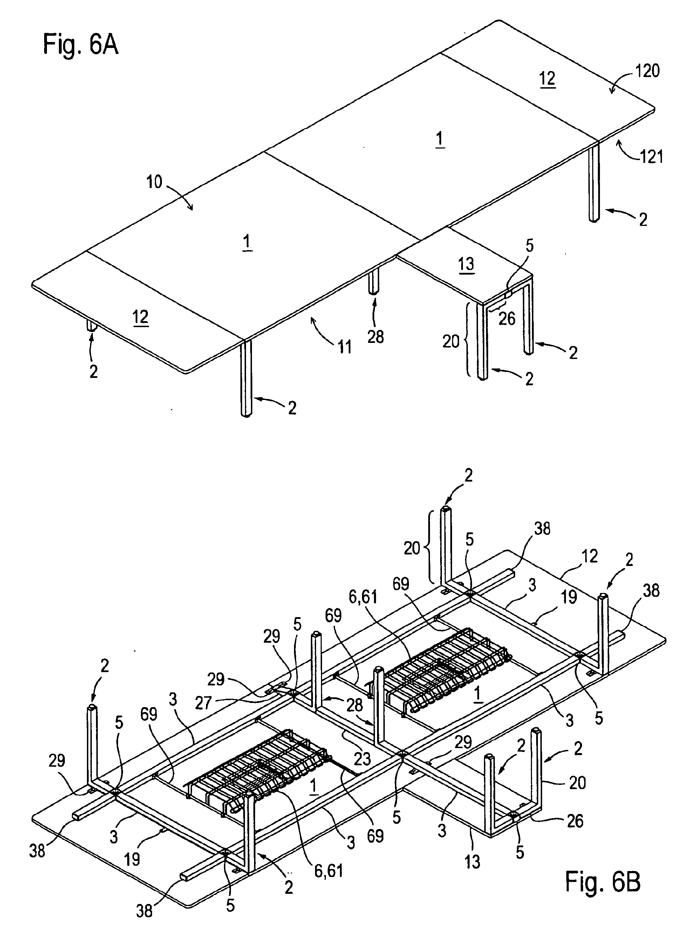

- Figur 6A -: den Tisch gemäss Figur 3B, mit beidseitig angesetzten Anbau- platten und einer Seitenplatte, in Perspektivansicht von oben;
- Figur 6B -: den Aufbau gemäss Figur 6A, in Perspektivansicht von unten;
- Figur 7A -: einen Aufbau gemäss dem Prinzip nach Figur 1A, mit zwei Tischplatten und dazwischen gefügter schmalerer Tischplatte, in Perspektivansicht von oben;
- Figur 7B -: den Aufbau gemäss Figur 7A, in Perspektivansicht von unten;
- Figur 8A -: einen Verbinder aus Figur 1A, in vergrösserter Perspektivan- sicht von oben;
- Figur 8B -: den Verbinder gemäss Figur 8A, in Perspektivansicht von un- ten;

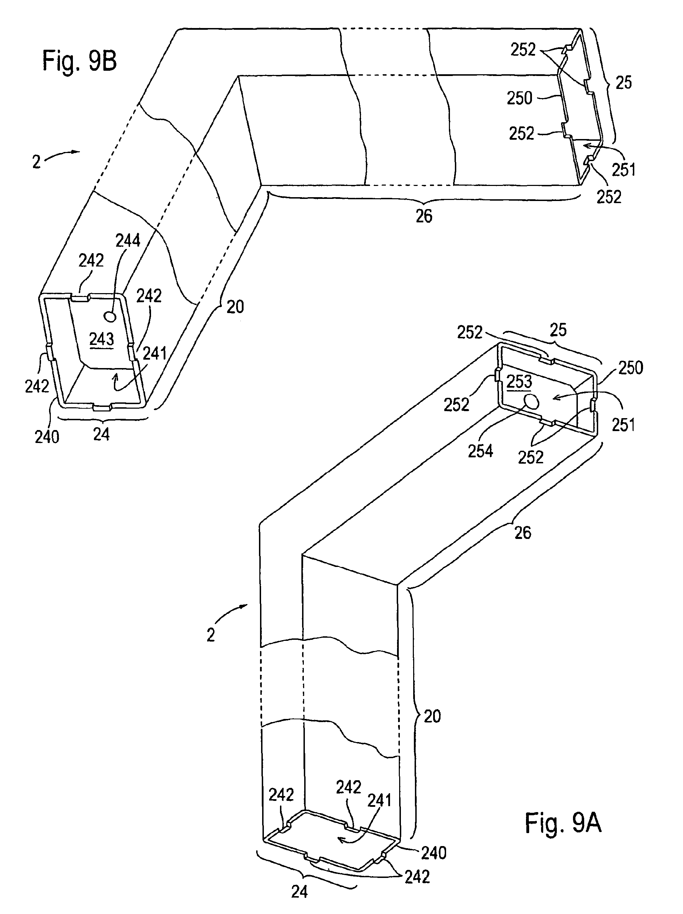

- Figur 9A -: ein Bein aus Figur 1A, in vergrösserter Perspektivansicht;
- Figur 9B -: das Bein gemäss Figur 9A, in gewechselter Perspektivansicht;
- Figur 10 -: eine Strebe aus Figur 1B, in Perspektivansicht;
- Figur 11 -: ein Verlängerungsteil aus Figur 1C, in Perspektivansicht;
- Figur 12A -: ein Bodenelement, eine Schraube und einen Adapter, in Explo- sivansicht;
- Figur 12B -: den Aufbau gemäss Figur 12A, zusammengebaut, in Perspek- tivansicht;
- Figur 13A -: den Aufbau gemäss Figur 1A, in partieller perspektivischer Ex- plosivansicht von oben;
- Figur 13B -: den Aufbau gemäss Figur 13A, in der Ansicht von unten;
- Figur 13C -: einen Aufbau gemäss dem Prinzip nach Figur 1A, mit abgeho- bener Tischplatte und entfernter Abdeckung, in Perspektivan- sicht;
- Figur 13D -: einen Aufbau gemäss dem Prinzip nach Figur 1A, mit abgeho- benen Tischplatten und Anbauplatte sowie entfernter Abde-
- Figur 13E -: ckung, in Perspektivansicht; ein Befestigungselement *erster Variante* aus Figur 13A, in Per- spektivansicht von oben;
- Figur 14A: einen Aufbau gemäss dem Prinzip nach Figur 1A, mit abgeho- benen Tischplatten, Kabelhalterungen und Screens, in Pers- pektivansicht;
- Figur 14B -: einen Aufbau gemäss dem Prinzip nach Figur 1A, mit Verka- belungszugang in der Tischplatte und abgehobenem Screen, in Perspektivansicht;
- Figur 14C -: den Aufbau gemäss Figur 14B, mit eingesetztem Screen, in Perspektivansicht;
- Figur 15: das vergrösserte Detail X1 aus Figur 1A, im Vertikalschnitt;
- Figur 16: das vergrösserte Detail X2 aus Figur 1C;
- Figur 17A: das vergrösserte Detail X3 aus Figur 1B;
- Figur 17B: einen Horizontalschnitt auf der Linie A-A gemäss Figur 17A, mit aufgestecktem Deckel;

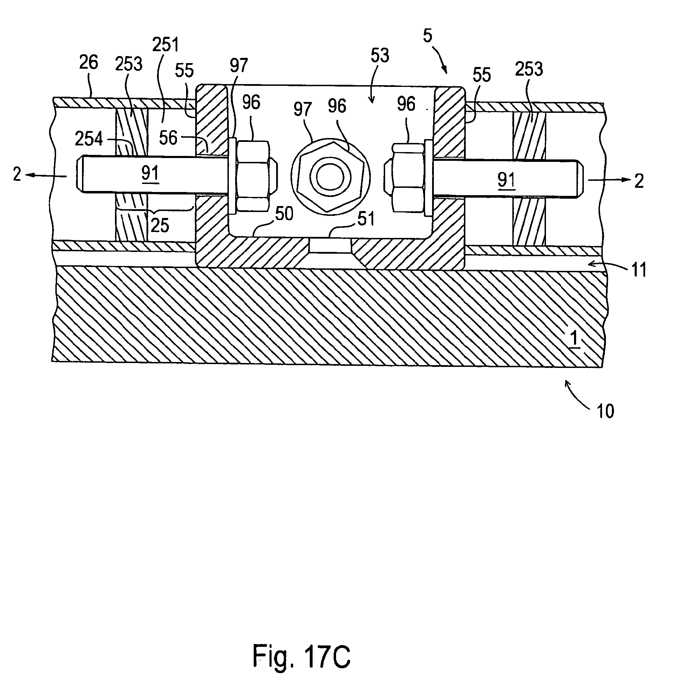

- Figur 17C: einen Vertikalschnitt auf der Linie B-B gemäss Figur 17A;
- Figur 18A: einen Aufbau gemäss Figur 2B, mit Befestigungselementen *zweiter Variante* sowie Verkabelungszugang;
- Figur 18B: einen Aufbau gemäss Figur 3B, mit modifizierten Bauteilen und Verkabelungszugängen;
- Figur 18C: den Aufbau gemäss Figur 13A, mit modifizierten Bauteilen;
- Figur 18D: das Rahmengestell aus Figur 18B, in partieller perspektivischer Explosivansicht von oben;
- Figur 18E: das vergrösserte Detail X4 aus Figur 18D;
- Figur 18F: das vergrösserte Detail X5 aus Figur 18D;
- Figur 18G: ein Stützelement aus Figur 18A, in Perspektivansicht von oben;

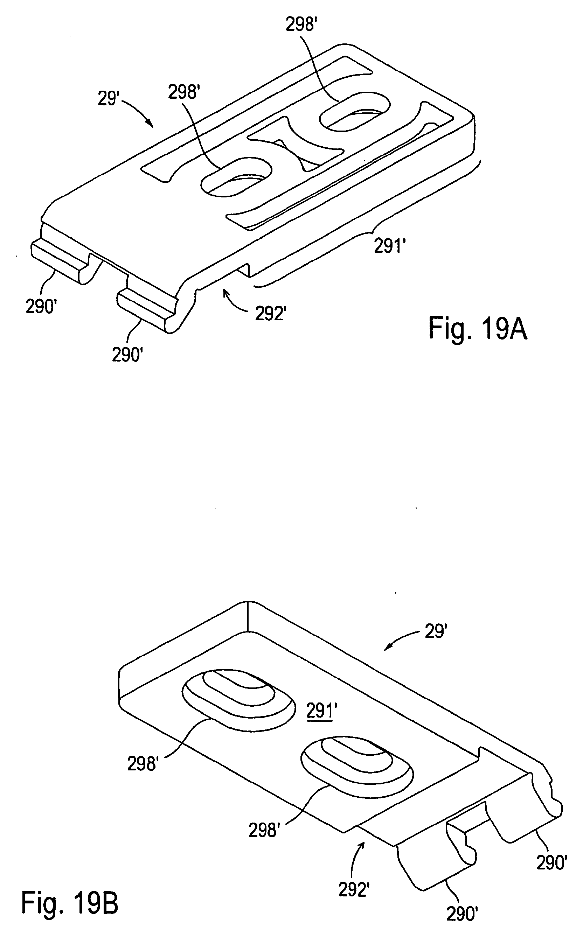

- Figur 19A: ein Befestigungselement *zweiter Variante* aus Figur 18A, in Perspektivansicht von oben;
- Figur 19B: das Befestigungselement gemäss Figur 19A, in Perspektivan- sicht von unten;
- Figur 19C: einen Einhängevorgang des Befestigungselements *zweiter Va- riante* gemäss Figur 19A, als Prinzipdarstellung;

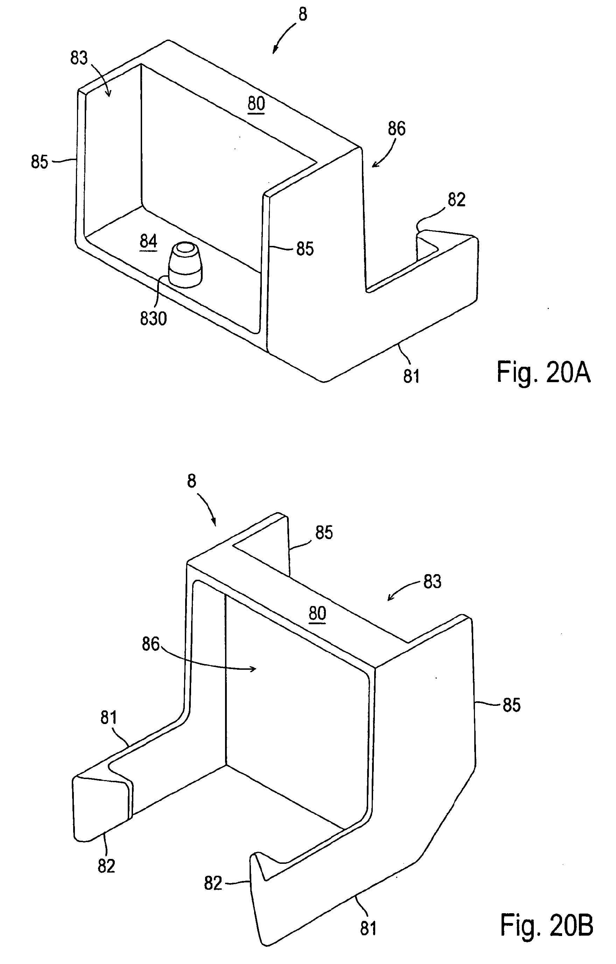

- Figur 20A: ein Brückenteil aus Figur 18B, in Perspektivansicht von oben;
- Figur 20B: das Brückenteil gemäss Figur 20A, in gewechselter Perspektiv- ansicht;

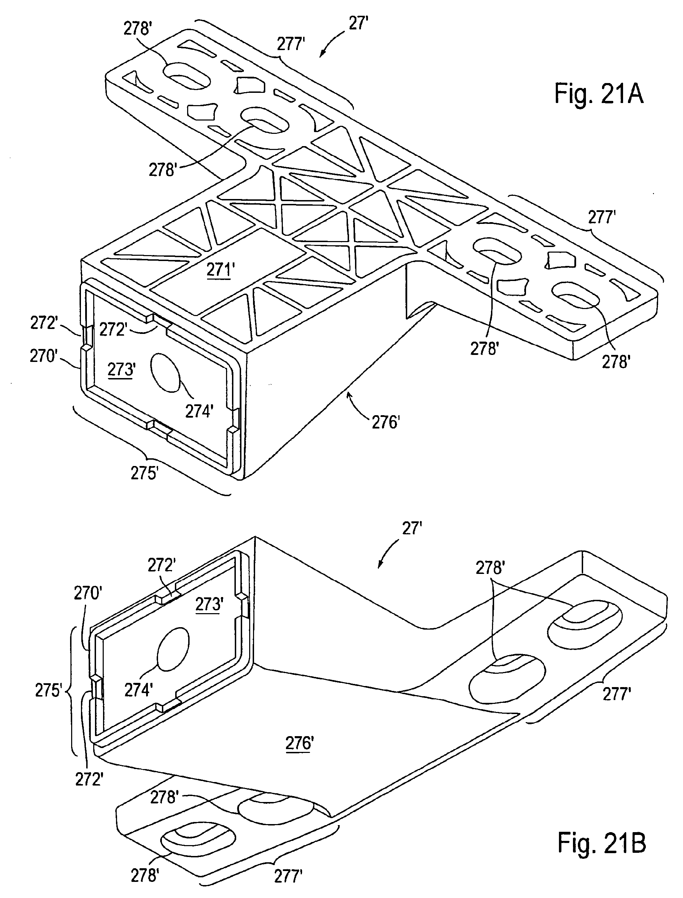

- Figur 21A: ein Stützteil *zweiter Variante* aus Figur 18B, in Perspektivan- sicht von oben; und
- Figur 21B: das Stützteil gemäss Figur 21A, in Perspektivansicht von un- ten.

### Ausführungsbeispiel

Anhand der beiliegenden Zeichnungen erfolgt nachstehend die detaillierte Beschreibung eines Ausführungsbeispiels zur erfindungsgemässen Tischkonstruktion mit Varianten des baukastenartigen Aufbaus verschieden konfigurierter Tischgrössen und -formen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A und 1B

In dieser Figurenfolge besteht die Tischkonstruktion aus einer rechteckigen Tischplatte **1** mit einer als Arbeitsfläche dienenden Oberseite **10** und einer Unterseite **11** sowie einem die Tischplatte **1** tragenden Untergestell. Das Untergestell setzt sich im wesentlichen aus paarweise kombinierten Beinen **2,** einer sich in Längsrichtung der Tischplatte **1** verlaufenden Strebe **3** und Verbindern **5** zusammen. Die Beine **2** sind aus rechteckigem Hohlprofil und haben jeweils ein zum Boden gerichtetes Fussteil **20** sowie ein an dessen oberen Ende rechtwinklig abgehendes Querteil **26.** Die Fussteile **20** eines Paars von Beinen **2** haben die gleiche Länge, hingegen sind die Querteile **26** unterschiedlich lang. Im gezeigten Beispiel sind die Beine **2** so montiert, dass die Aussenkanten der Querteile **26** und die Aussenkanten der Fussteile **20** jeweils bündig mit der Aussenkante der Schmalseite bzw. der Längsseite der Tischplatte **1** abschliessen. Die Querteile **26** eines Paars von Beinen **2** sind zueinander fluchtend ausgerichtet und jeweils an einem quaderförmigen Verbinder **5** befestigt. An die Querteile **26** setzen laschenförmige Befestigungselemente *erster Variante* **29** an, welche an der Tischplattenunterseite **11** verankert sind, z.B. mittels Schrauben. An den der Stellfläche zugewandten freien Enden sind die Fussteile **20** jeweils mit einem Adapter **22** versehen, um darin ein in der Höhe nivellierbares Bodenelement **21** aufzunehmen. Die beiden Enden der Strebe **3** sind jeweils an einem der beiden Verbinder **5** befestigt, und zwar an einer weiteren Seitenfläche, die zwischen denen von den angedockten Querteilen **26** belegten Seitenflächen liegt. Die Enden zweier zugewandter Querteile **26** und das benachbarte Ende der Strebe **3** setzen T-förmig an den Verbinder **5** an. Die vier Querteile **26** am Tisch liegen mit der aussermittig angeordneten Strebe **3** und den beiden Verbindern **5** auf einer Ebene. Die vierten, nach aussen weisenden Seitenflächen der Verbinder **5** bleiben frei und können mit einem Deckel überdeckt werden.

### Figuren 1C und 1D

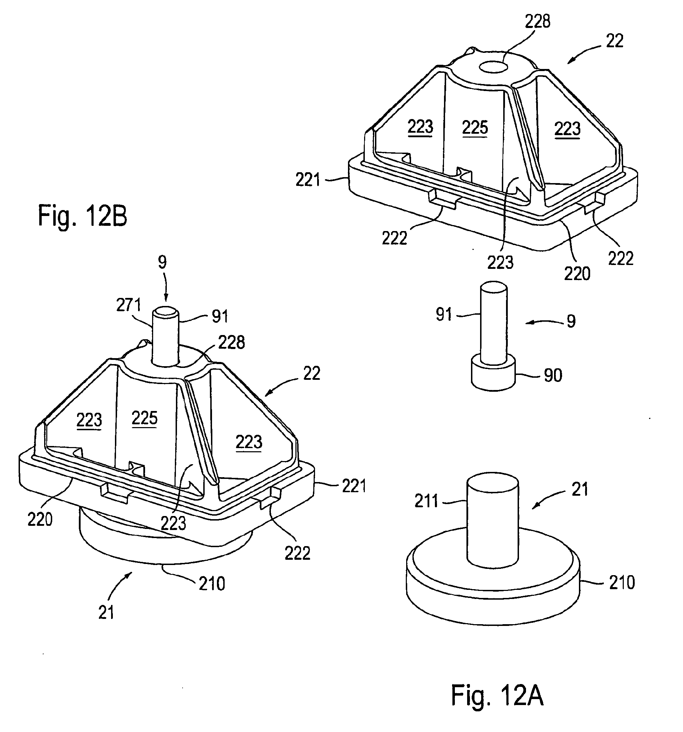

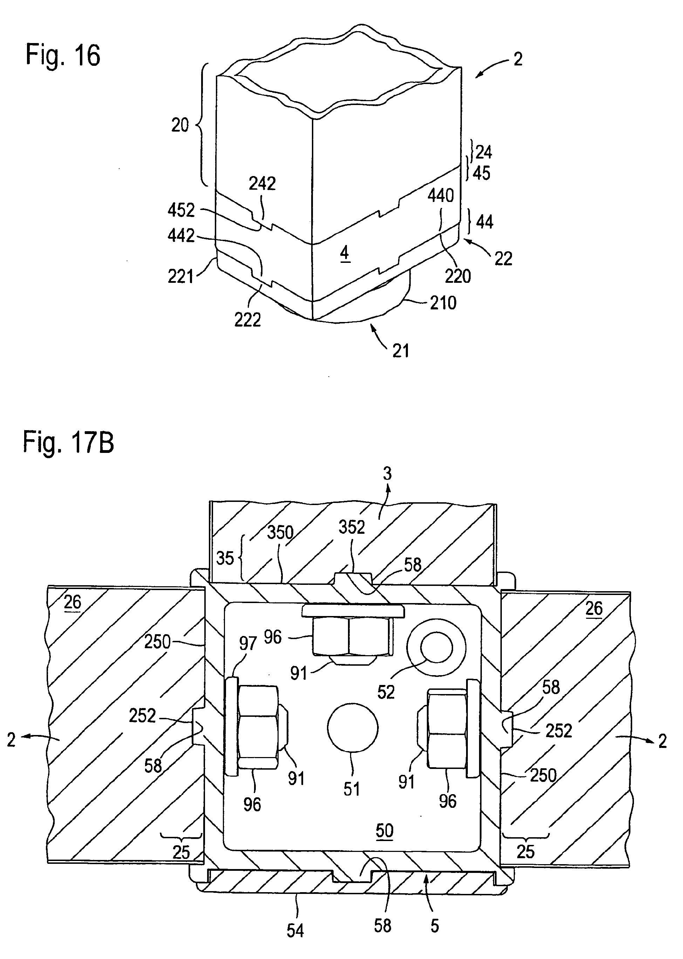

Zwischen dem freien Ende des Fussteils **20** und dem Adapter **22** lässt sich ein Verlängerungsteil **4** einfügen, wodurch die Fussteile **20** länger werden und die als Arbeitsfläche dienende Oberseite **10** der Tischplatte **1** damit in grössere Höhe gelangt. Das Verlängerungsteil **4** hat den gleichen Querschnitt wie das Fussteil **20.** Um einen noch höheren Tisch aufzubauen, kann man Beine **2** mit längerem Fussteil **20,** längere Verlängerungsteile **4** oder an jedem Fussteil **20** mehrere aneinander gesetzte Verlängerungsteile **4** vorsehen. Die Verbindung zwischen Fussteil **20,** eventuell angesetztem Verlängerungsteil **4,** Adapter **22** und Bodenelement **21** wird zu den Figuren 12A, 12B, 15 und 16 beschrieben.

### Figuren 2A und 2B

Bei diesem Tischaufbau ist die Tischplatte **1** von grösserer Breite, so dass gegenüberliegend Arbeitsplätze eingerichtet werden können. Ausserdem ist an die vorhandene Tischplatte **1** eine Anbauplatte **12** gleicher Breite angesetzt, wodurch sich die Tischfläche auch verlängert. Analog zur Oberseite **10** und Unterseite **11** an der Tischplatte **1** hat die Anbauplatte **12** eine als Arbeitsfläche nutzbare Oberseite **120** und eine Unterseite **121.** Das die Tischplatte **1** und die Anbauplatte **12** tragende Untergestell hat vier Verbinder **5,** wobei jeweils zwei Verbinder **5** bündig zu den querseitigen Aussenkanten der Tischplatte **1** so mit einem Versatz zu den Ecken der Tischplatte **1** angeordnet sind, dass Beine **2** mit gleichlangen Querteilen **26** verwendet werden können und deren Fussteile **20** in den Ecken der Tischplatte **1** positioniert sind. Zwischen den vier Verbindern **5** sind, ein Rechteck bildend, vier Streben **3** eingesetzt. Im Bereich des Übergangs zur Anbauplatte **12** ist an jedem Verbinder **5** an der verbleibenden vierten Seitenfläche jeweils ein Strebenfortsatz **38** befestigt, der zur gegenüberliegend verlaufenden Strebe **3** fluchtet und die aufgesetzte Anbauplatte **12** stützt. An der Strebe **3,** die sich zwischen den von den Verbindern **5** abgehenden Strebenfortsätzen **38** erstreckt, ist im Bereich des Übergangs zur Anbauplatte **12** ein Stützelement **19** vorhanden, welches an der Tischplattenunterseite **121,** z.B. mittels Schrauben, fixiert ist. Zur Stabilisierung der auf den Grundflächen **50** der Verbinder **5** ruhenden Tischplatte **1** oder Anbauplatte **12** wird es insbesondere bei grösseren Dimensionen von Tischaufbauten angebracht sein, zwischen der Unterseite **11** bzw. **121** und den Querteilen **26** sowie Streben **3,** welche gegenüber den Grundflächen **50** abgesenkt sind, Stützelemente **19** einzusetzen.

### Figuren 3A und 3B

Die Arbeitsfläche dieses Tischaufbaus wird von den Oberseiten **10** zwei gleich dimensionierter Tischplatten **1** gebildet, die mit ihren zugewandten querseitigen Aussenkanten aneinandergefügt sind. Das die beiden Tischplatten **1** tragende Untergestell hat zunächst vier Verbinder **5,** von denen jeweils zwei Verbinder **5** bündig zu jeder freien querseitigen Aussenkante der Tischplatten **1** so mit einem Versatz zu den Ecken der Tischplatten **1** angeordnet sind, dass Beine **2** mit gleichlangen Querteilen **26** verwendet werden können und deren Fussteile **20** jeweils in zwei Ecken der betreffenden Tischplatte **1** positioniert sind. Die Fuge beider aneinander stossender Tischplatten **1** überdeckend sind an der Tischplattenunterseite **11** zwei zusätzliche Verbinder **5** angeordnet, so dass jeweils drei Verbinder **5** in Längsrichtung zueinander fluchten. Zwischen die beiden zusätzlichen Verbinder **5** ist ein einteiliges Doppelbein **28** eingesetzt, das aus zwei Beinen **2** mit jeweiligem Fussteil **20** und davon rechtwinklig nach aussen abgehendem Querteil **26** sowie einem die Fussteile **20** überbrückenden Mittelteil **23** besteht, welches zu den beiden Querteilen **26** fluchtet. Das Mittelteil **23** ist z.B. zwischen die beiden Beine **2** eingeschweisst. Zwischen den jeweils zwei Verbindern 5 jeder Tischplatte **1** untereinander und zu den zwei zusätzlichen Verbindern **5** erstreckt sich jeweils eine Strebe **3,** so dass mit dem gemeinsam genutzten Doppelbein **28** eine Gestellstruktur aus zwei aneinander grenzenden Rechtecken entsteht. An die verbleibende vierte Seitenfläche jedes zusätzlichen Verbinders **5** ist ein sich nach aussen abflachendes Stützteil *erster Variante* **27** angesetzt, das fluchtend zum benachbarten Querteil **26** ebenfalls die Fuge der zusammen kommenden Tischplatten **1** an der Unterseite **11** überbrückt. Die Querteile **26,** Stützteile *erster Variante* **27** und Streben **3** lassen sich mit Befestigungselementen *erster Variante* **29** an den Tischplattenunterseiten **11** verankern, um letztere auf dem Untergestell zu fixieren.

### Figur 3C

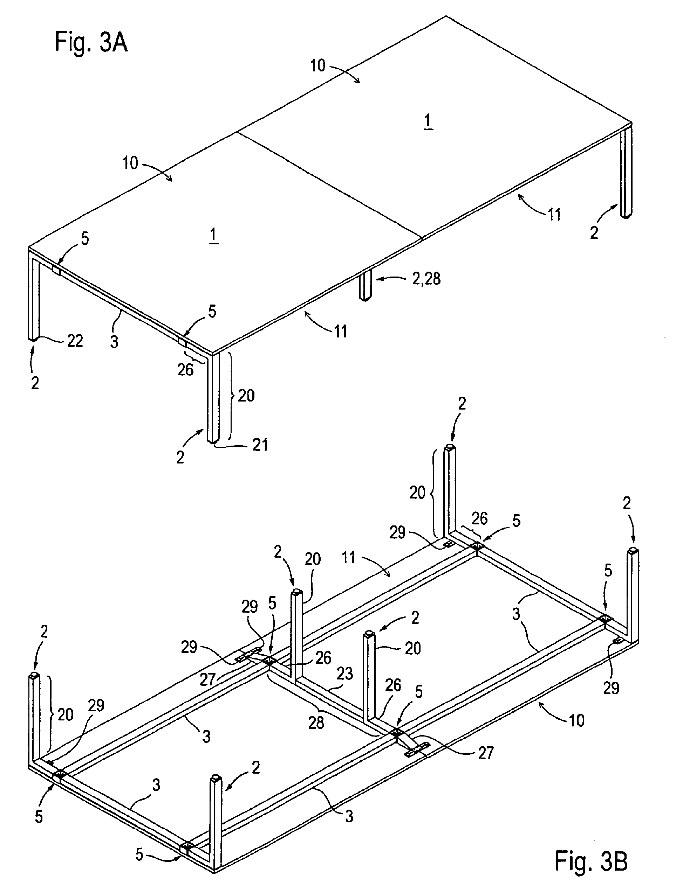

Bei dieser Ausführung sind in Abwandlung zu den Figuren 3A und 3B anstelle des Doppelbeins 28 und der beiden Stützteile *erster Variante* 27 zwei Beine 2 mit ihrem jeweiligen Querteil 26 am zugehörigen zusätzlichen Verbinder 5 befestigt.

### Figuren 4A und 4B

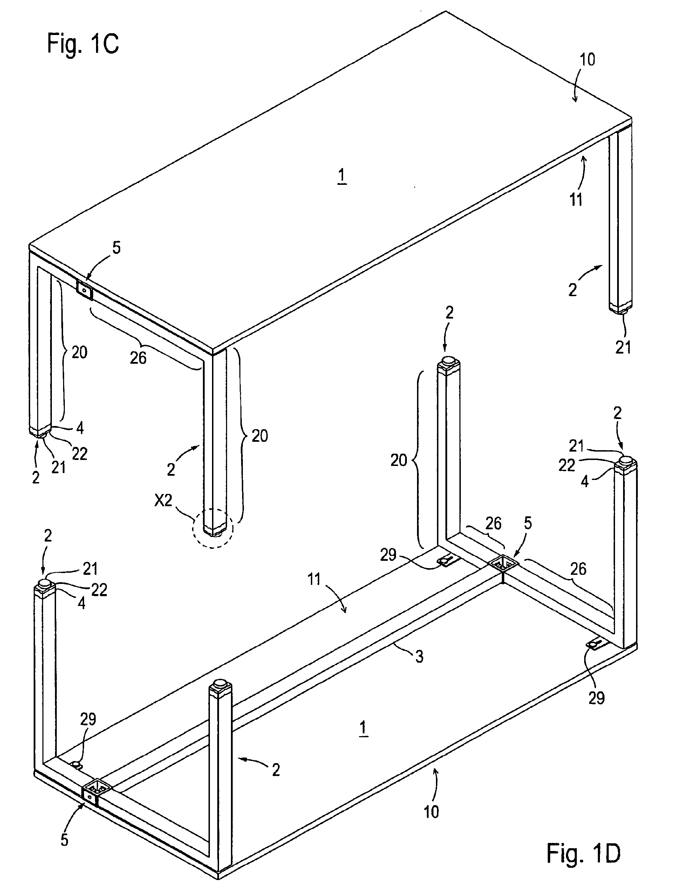

Hier ist die Tischplatte 1 von runder Gestalt, in deren Zentrum an der Tischplattenunterseite 11 ein Verbinder 5 positioniert ist. An die vier Seitenflächen des Verbinders 5 setzt je ein Verlängerungsteil 4 an, das jeweils mit dem Querteil 26 eines Beins 2 verbunden ist. Damit ergibt sich ein kreuzförmig aufgebautes Untergestell. Im gezeigten Beispiel schliessen die Fussteile 20 etwa bündig mit der Aussenkante der Tischplatte **1** ab. Für die Verbindung der Tischplatte **1** mit dem Untergestell werden wiederum Befestigungselemente **29** verwendet, die sich von den Querteilen **26** erstrecken und an der Tischplattenunterseite **11** verankert sind. Für die Wahl der Höhe des Tisches **1** gelten die gleichen Optionen, wie zu den Figuren 1C und 1D beschrieben. Bei einer Tischplatte **1** mit kleinerem Durchmesser würde man auf die Verlängerungsteile **4** verzichten und/oder Beine **2** mit kürzeren Querteilen **26** verwenden. Bei grösseren Durchmessern der Tischplatte **1** kommt die Verwendung von Beinen **2** mit längeren Querteilen **26** und/oder von längeren Verlängerungsteilen **4** und/oder von mehreren Verlängerungsteilen **4** in Betracht.

### Figur 4C

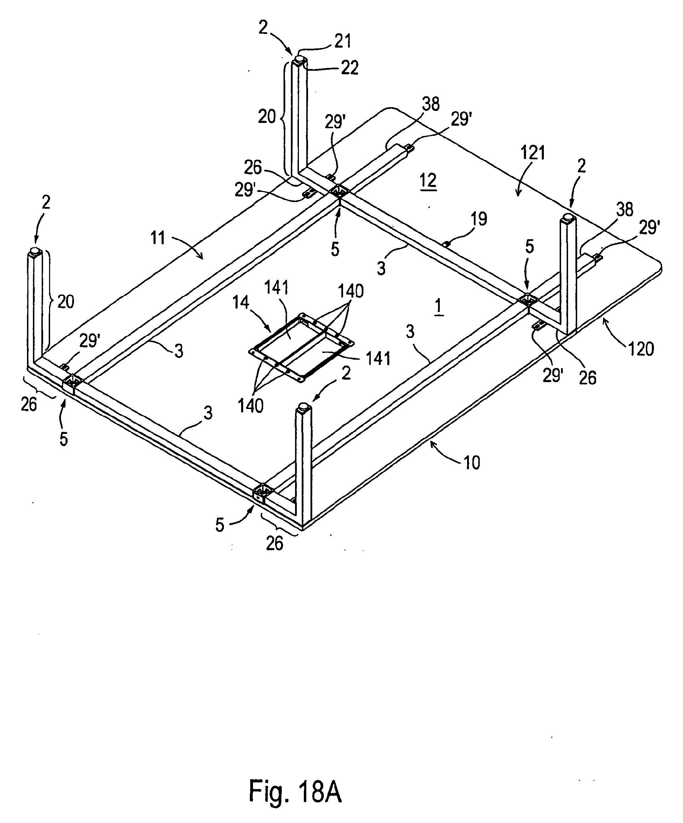

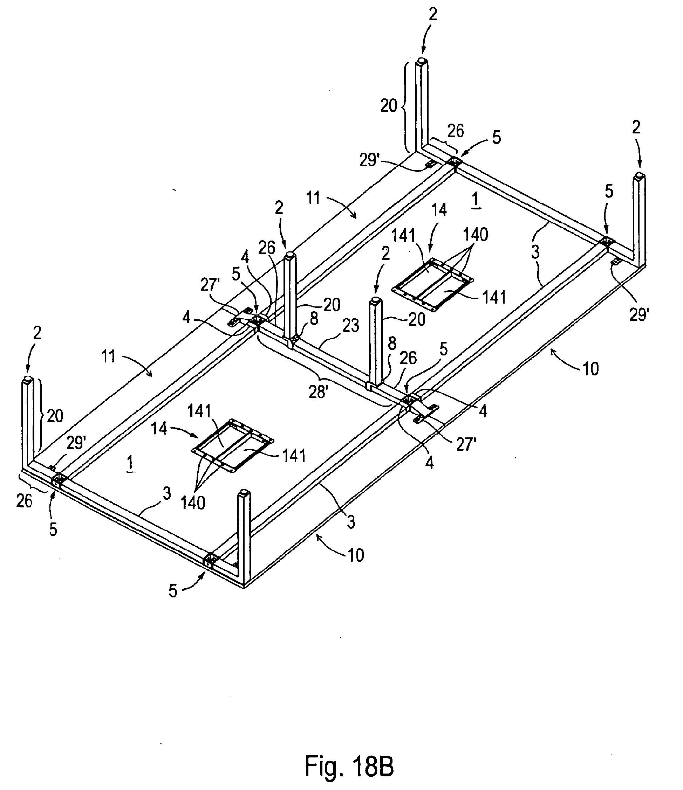

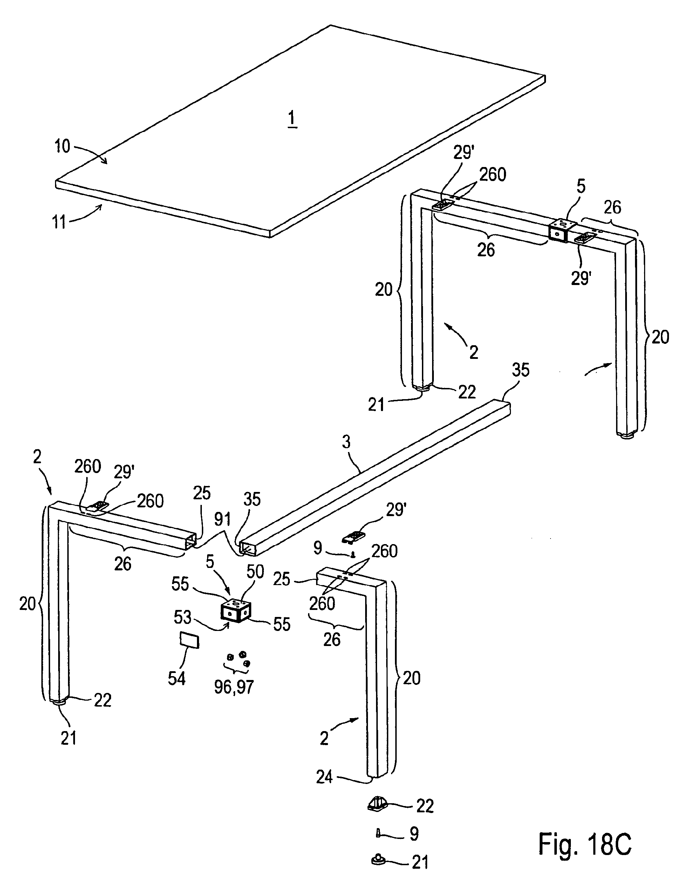

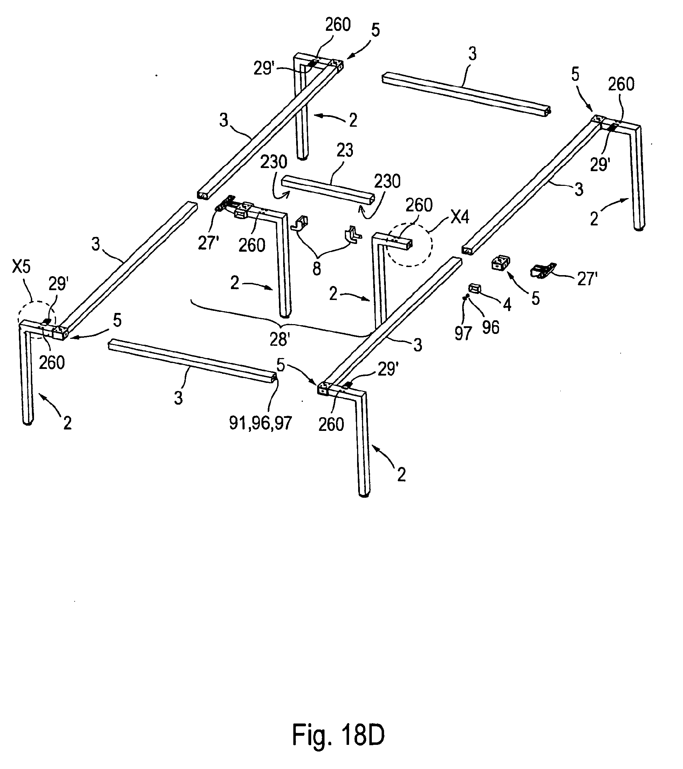

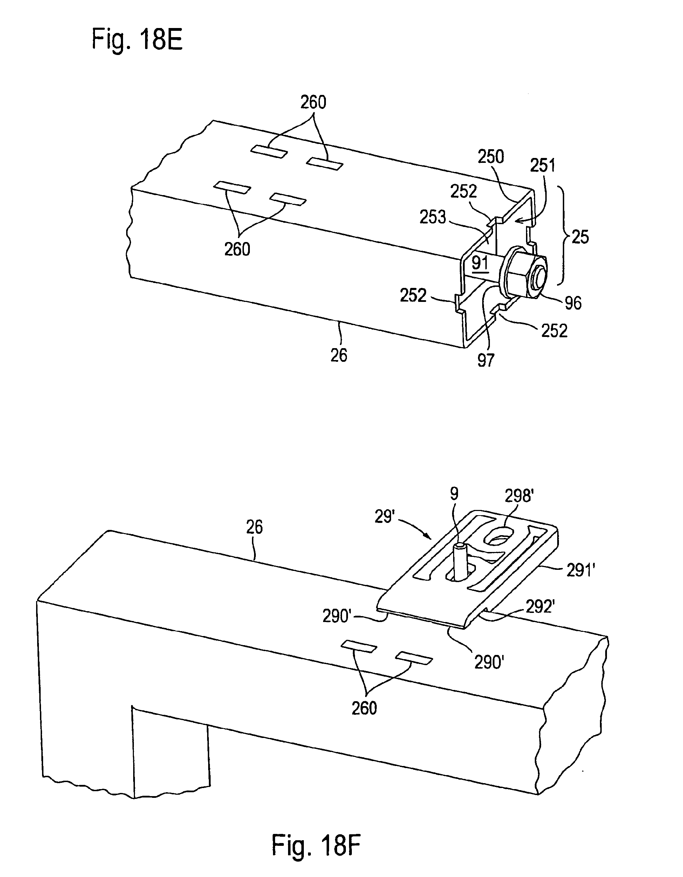

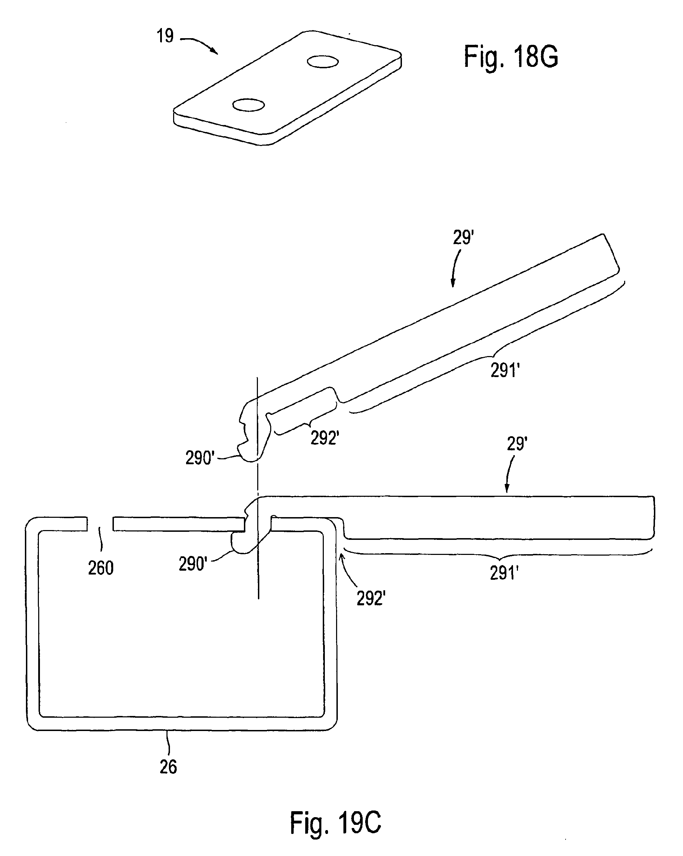

Für grössere Durchmesser von Tischplatten **1** steht alternativ ein abgewandelter Aufbau des Untergestells zur Verfügung, bei dem vier Verbinder **5** im Quadrat an der Tischplattenunterseite **11** mit Versatz zum Mittelpunkt befestigt sind. Von jedem Verbinder **5** erstreckt sich eine Strebe **3** zum benachbarten Verbinder **5,** und an jedem Verbinder **5** ist das Querteil **26** eines Beins **2** angeordnet. Die Querteile **26** zweier benachbarter Beine **2** stehen dabei rechtwinklig zueinander. In Abwandlung lassen sich die Querteile **26** von vier Beinen **2** auch so an den Verbindern **5** montieren, dass jeweils zwei benachbarte Querteile **26** zueinander parallel und zueinander gegenüber liegen. Zur Modifizierung der Untergestelle kann man an den Verbindern **5** jeweils zwei Beine **2** anbringen oder zwischen jeweils zwei Verbindern **5** ein Doppelbein **28** vorsehen und an den freien Seitenflächen der Verbinder **5** nach aussen weisende Stützteile *erster Variante* **27** oder *zweiter Variante* **27'** (s. Figur 18B) befestigen.

### Figuren 5A und 5B

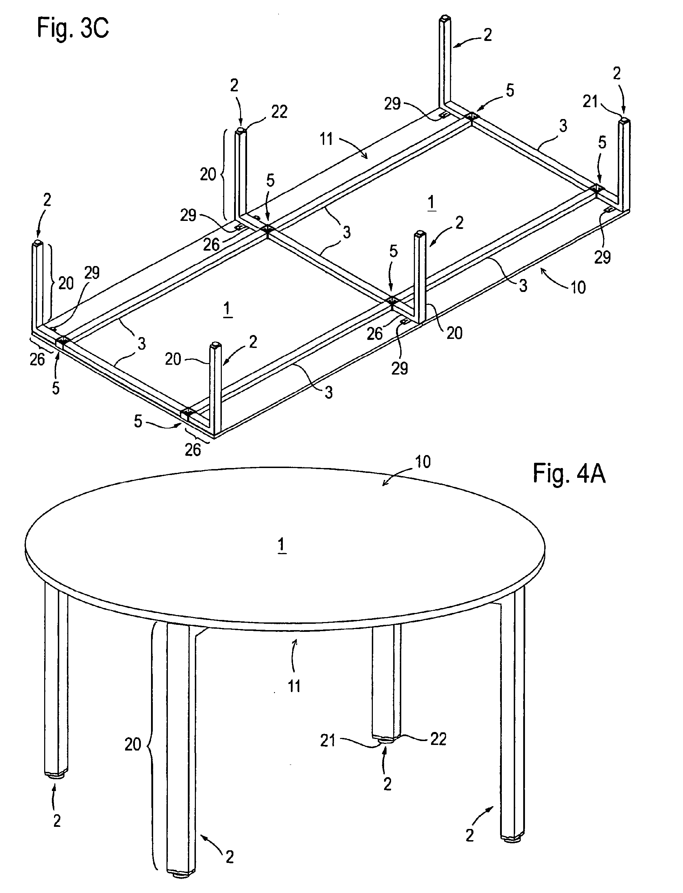

Dieser Tischaufbau entspricht weitgehend jenem der Figur 3C, wobei an einer Schmalseite des Tischs eine Abdeckung **7** montiert ist, die sich bis zum Boden, bis oberhalb der Tischplattenoberseite **10** und bis über die Längsseiten des Tischs hinaus erstrecken kann. Die Abdeckung **7** wird mittels an ihrer Innenfläche montierter Befestigungselemente **79** an den beiden zugewandten Verbindern **5** fixiert.

### Figuren 6A und 6B

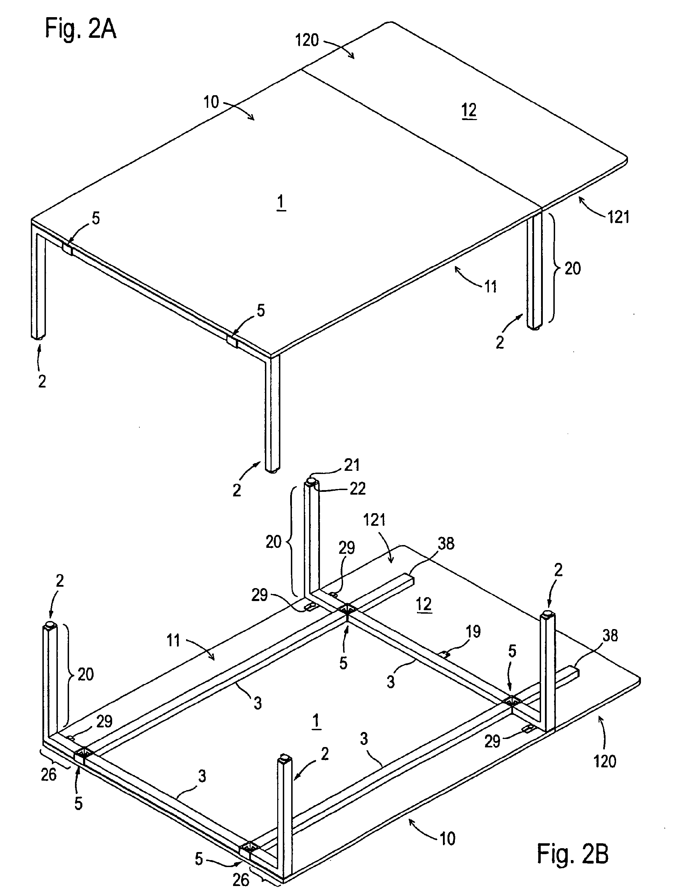

Dieser erweiterte Tischaufbau geht vom Aufbau gemäss den Figuren 3A und 3B aus. Zusätzlich sind an beiden Tischenden jeweils eine Anbauplatte **12** gemäss dem Prinzip aus den Figuren 2A und 2B sowie eine Seitenplatte **13** an einer der Längsseiten des Tischs - im Bereich des Zusammentreffens beider Tischplatten **1 -** angesetzt, und unter den Tischplatten **1** befinden sich an Aufhängungen **69** angebrachte Kabelhalterungen **6** in Gestalt von Kabelkörben **61.** Die Anbauplatten **12** werden in der zuvor beschriebenen Weise von paarweisen Strebenfortsätzen 38 gestützt. Die Seitenplatte **13** ruht auf einer Strebe **3,** welche anstelle eines Stützteils *erster Variante* **27** einerseits am nächstgelegenen Verbinder 5 befestigt ist. Am nach aussen ragenden freien Ende der Seitenplatte **13** ist an deren Unterseite mittig ein weiterer Verbinder **5** angeordnet, an welchem diese Strebe **3** andererseits befestigt ist. T-förmig zur ansetzenden Strebe **3** ist an einander gegenüber liegenden Seitenflächen des weiteren Verbinders **5** jeweils ein Querteil **26** eines Beins **2** fixiert. Die Aufhängungen **69** für die daran einhängbaren Kabelkörbe **61** sind Stangen, welche sich jeweils zwischen zwei in Längsrichtung des Tischs an der Tischplattenunterseite **11** verlaufenden Streben **3** erstrecken. Die Kabelkörbe **61** lassen sich einseitig aushängen und abschwenken, so dass ein erleichterter Zugang für das Einlegen von Kabeln, Kupplungen, Steckdoseneinheiten und ähnlichen Installationskomponenten ermöglicht wird.

### Figuren 7A und 7B

Diesen erweiterten Tischaufbau könnte man als vom Aufbau gemäss Figur 3C ausgehend betrachten. Die zwei Tischplatten **1** gleichen Zuschnitts sind mit dem jeweiligen Untergestell - bestehend aus vier Verbindern **5,** vier Beinen **2** und vier Streben **3 -** soweit auseinandergerückt, dass sich eine Zwischenplatte **16** auf der Ebene der zwei Tischplatten **1** quasi fugenlos einfügen lässt und somit eine einheitliche Arbeitsfläche entsteht. Die Zwischenplatte **16** ist von geringerer Breite als die angrenzenden Tischplatten **1** und schliesst bündig mit einer Längskante der beiden Tischplatten **1** ab, wodurch die Zwischenplatte **16** im Verhältnis zu den gegenüber liegenden Längskanten der beiden Tischplatten **1** eine Aussparung belässt. Diese Aussparung ist z.B. zum Einstellen eines anderen Möbels - wie ein Schrank oder ein Regal - oder zum Umbauen eines Bauwerkteils, wie ein Stützpfeiler, nutzbar. Die Zwischenplatte **16** wird von einer sich längs unterhalb der Zwischenplatte **16** erstreckenden Strebe **3** gestützt, deren Enden an jeweils einem zugewandten Verbinder **5** befestigt sind. Unterhalb der Zwischenplatte **16** ist ein weiterer Typ einer Kabelhalterung **6** installiert, nämlich in Form eines Kabelnetzes **62.** Für die Fixierung der Tischplatten **1** und der Zwischenplatte **16** auf dem komplexen Untergestell kommen wiederum die zuvor erwähnten Befestigungselemente *erster Variante* **29** zum Einsatz.

### Figuren 8A und 8B

Der Verbinder **5** ist von quaderförmiger Gestalt und hat eine Grundfläche **50** mit einem zentrischen ersten Durchgangsloch **51,** um das herum in gleichen Abständen, ein Quadrat bildend, vier zweite Durchgangslöcher **52** positioniert sind. Von den Aussenkanten der Grundfläche **50** erheben sich vier gleich grosse Seitenflächen **55,** in denen jeweils mittig ein drittes Durchgangsloch **56** sitzt. In jeder Seitenfläche **55** befindet sich eine Nut **57,** die gleichmässig beabstandet nahe den Aussenkanten der betreffenden Seitenfläche **55** verläuft. Die Nut **57** wird von vier Stegen **58** unterbrochen, die senkrecht bzw. waagerecht zum dritten Durchgangsloch **56** positioniert sind, so dass ein Versatz zwischen den Stegen **58** von jeweils 90° entsteht. Gegenüber der Grundfläche **50** liegt eine Offenseite **53.**

### Figuren 9A und 9B

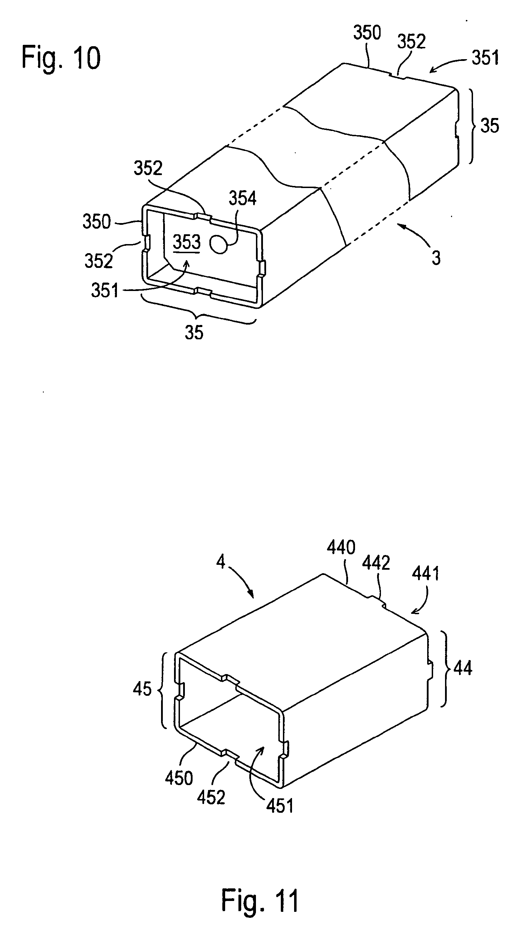

Das Bein **2** ist aus rechteckigem Hohlprofil und hat ein Fussteil **20,** von dem sich rechtwinklig ein Querteil **26** fortsetzt. Das Fussteil **20** weist an seinem freien Ende einen ersten Anschluss **24** auf, der mit einer umlaufenden Kante **240** abschliesst, von welcher sich vier jeweils um 90° versetzte Nasen **242** in zum Fussteil **20** fortsetzender Richtung erstrecken. Die Kante **240** und Nasen **242** sind komplementär zur am Adapter **22** vorhandenen Schulter **220** mit den Kerben **222** (s. Figur 12A, 12B) und zur am Verlängerungsteil **4** vorhandenen Schulter **450** mit den Kerben **452** (s. Figur 11). Innerhalb des Fussteils **20,** zur Kante **240** zurückversetzt, ist ein Boden **243** eingesetzt, der zur Kante **240** hin einen Hohlraum **241** bildet. Zentrisch im Boden **243** befindet sich ein Innengewinde **244.**

Das Querteil **26** weist an seinem freien Ende einen zweiten Anschluss **25** auf, der mit einer umlaufenden Kante **250** abschliesst, in welcher vier jeweils um 90° versetzte rechteckige Kerben **242** vorgesehen sind, die sich zum Querteil **26** hin erstrecken. Die Kante **250** und Kerben **252** sind komplementär zur am Verbinder **5** vorhandenen Nut **57** mit den Stegen **58** und zur am Verlängerungsteil **4** vorhandenen Schulter **440** mit den Nasen **442** (s. Figur 11). Innerhalb des Querteils **26,** zur Kante **250** zurückversetzt, ist ein Boden **253** eingesetzt, der zur Kante **250** hin einen Hohlraum **251** bildet. Zentrisch im Boden **253** ist ein Innengewinde **254** vorgesehen.

### Figur 10

Die aus einem rechteckigen Hohlprofil bestehende Strebe 3 hat nur zwei zweite Anschlüsse **35,** nämlich jeweils einen an ihren beiden freien Enden. Die zweiten Anschlüsse **35** schliessen jeweils mit einer umlaufenden Kante **350** ab, in welcher vier jeweils um 90° versetzte rechteckige Kerben **352** vorgesehen sind, die sich zur Strebe **3** hin erstrecken. Die Kante **350** mit den Kerben **352** sind komplementär zur am Verbinder **5** vorhandenen Nut **57** mit den Stegen **58** und zur am Verlängerungsteil **4** vorhandenen Kante **440** mit den Nasen **442** (s. Figur 11). Zu jeder Kante **350** zurückversetzt, ist ein Boden **353** eingesetzt, der zur jeweiligen Kante **350** hin einen Hohlraum **351** bildet. Zentrisch im Boden **353** befindet sich ein Innengewinde **354.**

### Figur 11

Wie das Bein **2** und die Strebe **3** besteht auch das Verlängerungsteil **4** aus einem rechteckigen Hohlprofil mit identischem Querschnitt. Das Verlängerungsteil **4** endet einerseits mit einem ersten Anschluss **44** und andererseits mit einem zweiten Anschluss **45.** Der erste Anschluss **44** besitzt die umlaufende Kante **440,** von der wiederum vier jeweils um 90° versetzte Nasen **442** abgehen. Die Kante **440** mit den Nasen **442** ist komplementär zur Kante **250** mit den Kerben 252 am zweiten Anschluss 25 des Querteils 26 und zu den Kanten 350 mit den Kerben 352 an den zweiten Anschlüssen 35 der Strebe 3.

Der zweite Anschluss 45 hat die umlaufende Kante 450 mit den daran mündenden vier jeweils um 90° versetzten Kerben 452. Die Kante 450 mit den Kerben 452 sind komplementär zur Kante 240 mit den Nasen 242 am ersten Anschluss 24 des Fussteils 20 des Beins 2 und zur am Verbinder 5 vorhandenen Nut 57 mit den Stegen 58.

### Figuren 12A, 12B und 15

Der Adapter 22 hat unten einen plattenförmigen, rechteckigen Sockel 221. Oben endet der Sockel 221 mit einer umlaufenden Schulter 220, in der sich vier jeweils zueinander um 90° versetzte Kerben 222 befinden. Vom Sockel 221 erheben sich flügelartige Wandsegmente 223, die auf einen zentrisch vom Sockel 221 aufragenden Schaft 225 zulaufen. Vom Boden des Sockels 221 erstreckt sich eine zentrische Innengewindebohrung 224 bis zu einem Sitz 226, wo ein Durchgangsloch 228 einerseits mündet, welches andererseits am Ende des Schafts 225 austritt. Der Adapter 22 ist zum Zusammenbau mit einer Schraube 9 - bestehend aus einem Kopf 90 und einem Gewindebolzen 91 - und einem Bodenelement 21 bestimmt, das unten einen tellerförmigen Gleiter 210 und einen sich zentrisch davon erhebenden Gewindestift 211 hat.

Im montierten Zustand, d.h. mit aufgesetztem Fussteil 20 des Beins 2, schliesst der Aussenumfang des Sockels 221 bündig mit dem Aussenumfang des ersten Anschlusses 24 des Fussteils 20 ab. Vom Fussteil 20 liegen die Kante 240 und die Nasen 242 kongruent auf der Schulter 220 bzw. in den Kerben 222 des Adapters 22. Die Wandsegmente 223 und der Schaft 225 ragen in den Hohlraum 241 des ersten Anschlusses 24. Der Kopf 90 der Schraube 9 liegt im Sitz 226 und der Gewindebolzen 91 durchragt das Durchgangsloch 228, um in das Innengewinde 244 des Bodens 243 des Fussteils 20 einzugreifen. Ferner ist der Gewindestift 211 des Bodenelements 21 in die Innengewindebohrung 224 im Adapter 22 eingedreht, so dass der Gleiter 210 in der Höhe nivelliert werden kann, um Unebenheiten auf der Standfläche auszugleichen. In gleicher Weise wie der erste Anschluss **24** des Fussteils **20** passt der erste Anschluss **44** des Verlängerungsteils **4** auf den Adapter **22,** wobei man dann eine längere Schraube **9** verwendet, die innerlich durch das Verlängerungsteil **4** bis in die Innengewindebohrung **244** im Boden **243** des an das Verlängerungsteil **4** angesetzten Fussteils **20** ragt.

### Figuren 13A und 13B

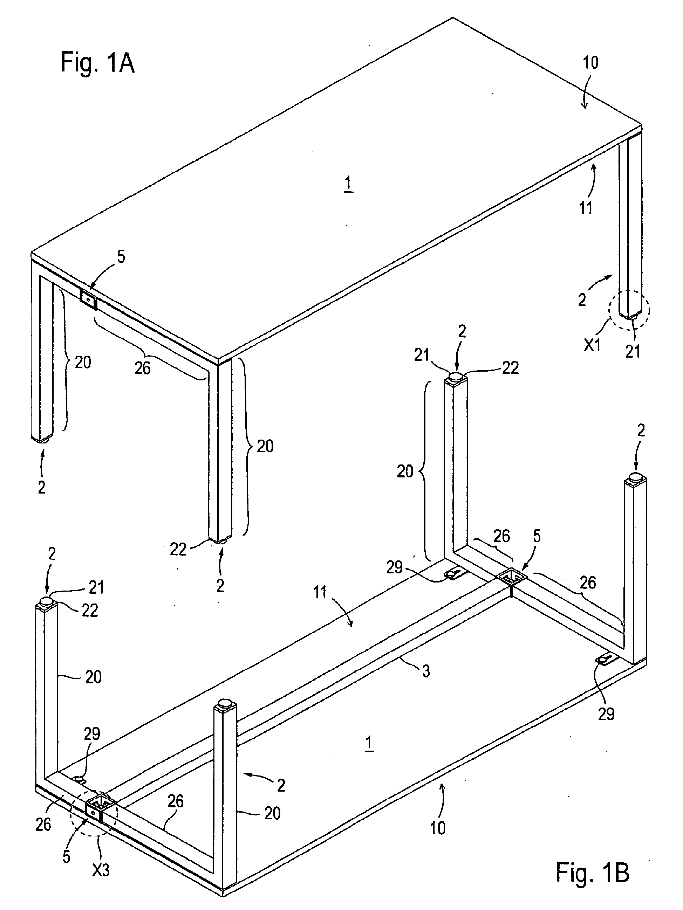

Dieses Figurenpaar zeigt den Tischaufbau gemäss den Figuren 1A und 1B in partiellen Explosivansichten mit den Einzelteilen des Untergestells. Die Tischplatte **1** ist in ihrer Grösse und Form dem konzipierten Untergestell angepasst, welches im wesentlichen aus zwei Paaren von Beinen **2** besteht, die mittels je eines Verbinders **5** zusammengesetzt sind. Jeweils ein Bein **2** hat ein längeres Querteil **26,** während das zum betreffenden Paar gehörende Bein **2** ein kürzeres Querteil **26** besitzt, so dass der dazwischen gefügte Verbinder **5** aussermittig sitzt. Die ungleich langen Querteile **26** sind sich gegenüber stehend mit ihren zweiten Anschlüssen **25** an gegenüber liegenden Seitenflächen **55** der Verbinder **5** mittels Schrauben **9** befestigt. Die Grundfläche **50** weist dabei nach oben, während die Offenseite **53** nach unten zeigt. Zum Anmontieren an jeweils eine dritte Seitenfläche **55** der beiden Verbinder **5** ist eine Strebe **3** mit ihrem an beiden Enden jeweils angeordneten zweiten Anschluss **35** vorgesehen, die somit aussermittig längs an der Tischplattenunterseite **11** zu liegen kommt. Zur Abdeckung der nach aussen weisenden, unbelegten vierten Seitenflächen **55** sind aufklipsbare Deckel **54** bereitgestellt. Für die Fixierung der Tischplatte **1** gibt es Befestigungselemente *erster Variante* **29,** die einerseits auf den Oberseiten der Querteile **26** der Beine **2** und andererseits an der Tischplattenunterseite **11** verschraubt sind. An die unteren Enden der Fussteile **20** der vier gleichlangen Beine **2** ist jeweils eine Kombination aus Adapter **22,** Schraube **9** und Bodenelement **21** anmontiert.

### Figur 13C

Dieser Tischaufbau hat eine breitere Tischplatte **1** und ist damit für gegenüberliegend eingerichtete Arbeitsplätze geeignet. Hierzu werden vier Beine **2** mit den kürzeren Querteilen **26** eingesetzt, an deren zweite Anschlüsse **25** jeweils ein Verbinder **5** montiert ist. Zwischen die jeweils beiden in Querrichtung und die jeweils beiden in Längsrichtung angeordneten Verbinder **5** sind paarweise gleichlange Streben **3** eingesetzt. Zur Abschirmung auf einer Querseite ist eine vertikal zu errichtende Abdeckung **7** vorgesehen, die sich bis zum Boden, über die Tischplattenoberseite **10** hinaus und über die Beine **2** hinaus erstreckt. Zum Anmontieren an die jeweils noch freie Seitenfläche **55** der Verbinder 5 sind auf der Innenseite der Abdeckung **7** Befestigungselemente **79** angebracht, die komplementär zu den beiden zugewandten Verbindern **5** positioniert sind.

### Figur 13D

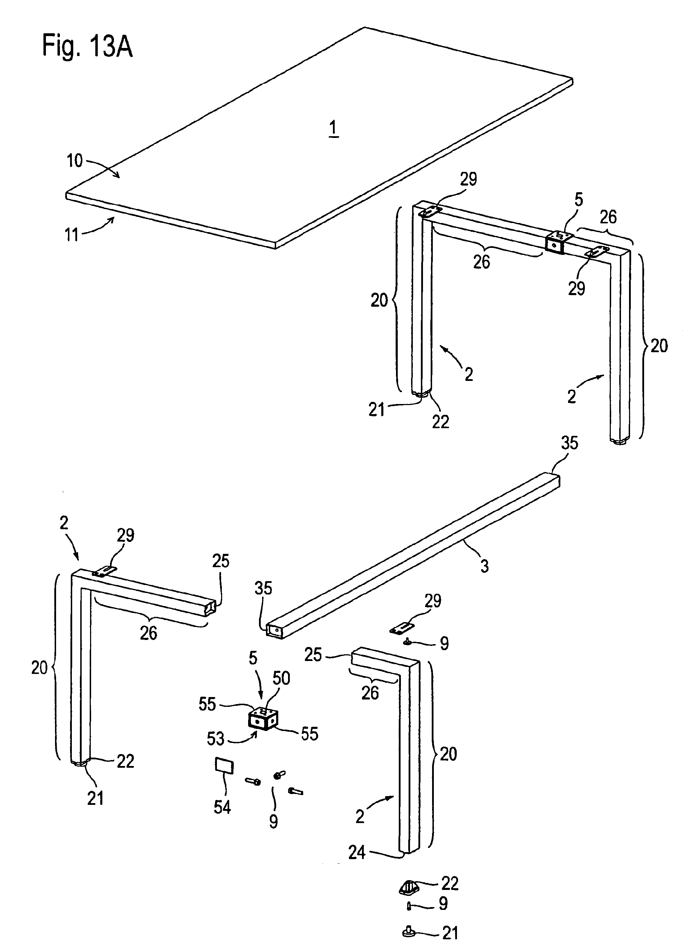

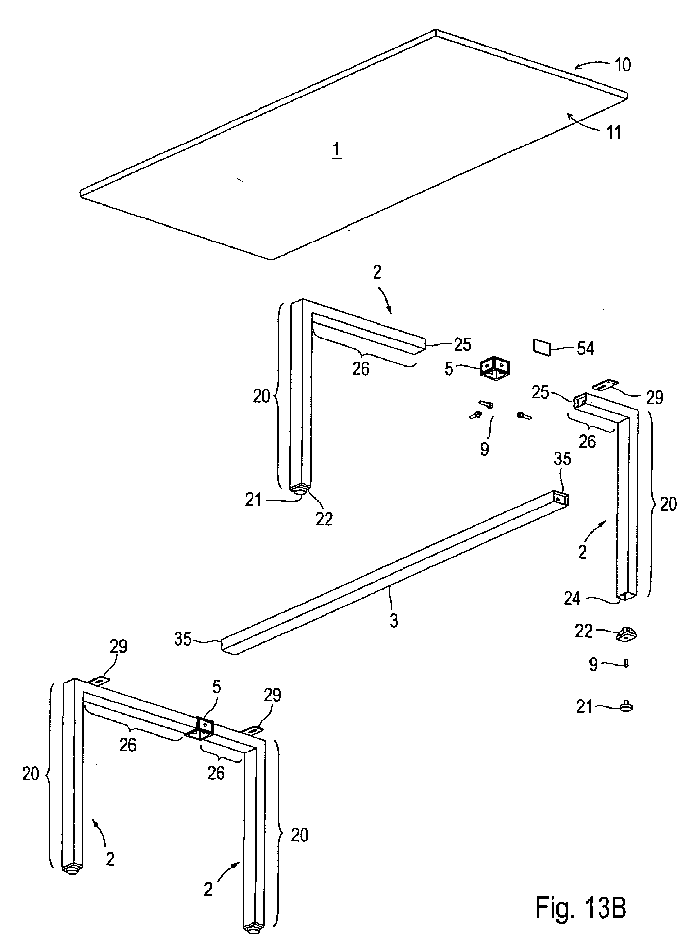

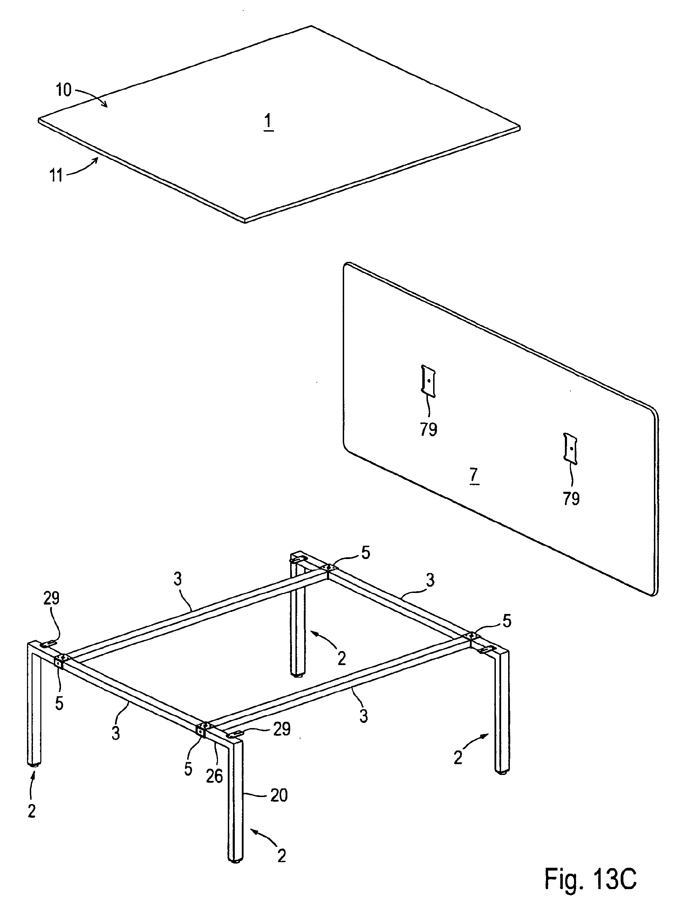

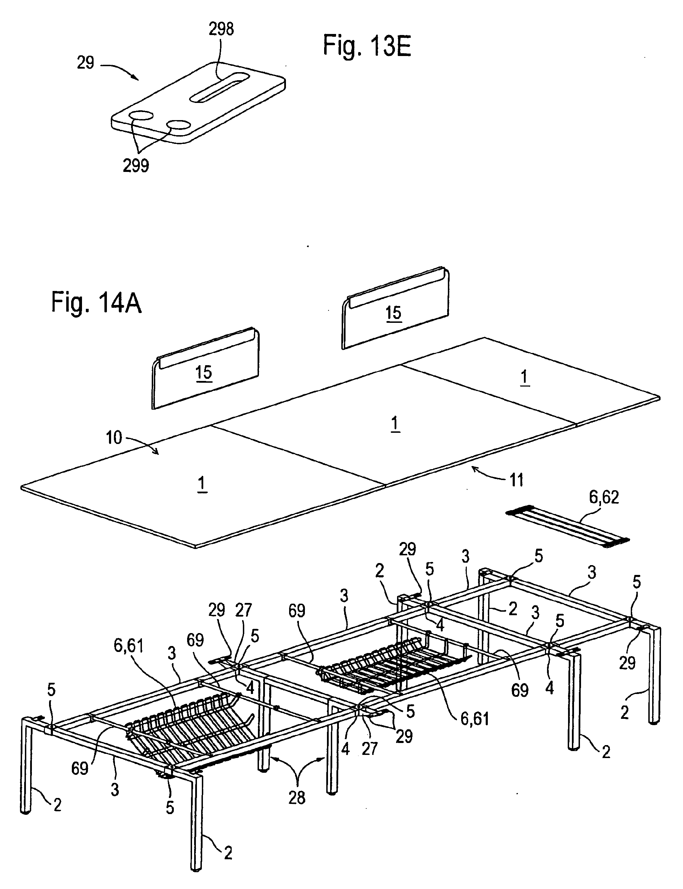

Dieser Tischaufbau hat die grössere Breite, wie in Figur 13C, und ist zugleich wesentlich länger. Hierzu sind jeweils vier Verbinder **5** in Längsrichtung verteilt, an die insgesamt acht Beine **2** mit den kürzeren Querteilen **26** ansetzen. Zwischen die jeweils beiden in Querrichtung angeordneten Verbinder **5** sind gleichlange Streben **3** eingesetzt. An die links aussen positionierten Verbinder **5** sind Strebenfortsätze **38** angesetzt, und an die rechts aussen sitzenden Verbinder **5** sind kurze Streben **3** montiert, die sich zu den nächstgelegenen Verbindern **5** erstrecken. Die übrigen Distanzen zwischen den in Längsrichtung angeordneten Verbindern **5** werden von langen Streben **3** überbrückt. Dieses Untergestell nimmt links aussen eine Anbauplatte **12** auf, an die sich zwei grossflächige Tischplatten **1** und eine Tischplatte **1** etwa halber Länge anschliessen. Für rechts aussen am Tischaufbau ist wiederum eine Abdeckung **7** vorhanden.

### Figur 13E

Das Befestigungselement *erster Variante* **29** wird mittels die Durchgangslöcher **299** durchragende Schrauben auf der Oberseite des Querteils **26** vom Bein **2** und mittels das Langloch **298** durchragender Schraube an der Unterseite **11** der Tischplatte **1** verschraubt. Damit ist die Tischplatte **1** fest mit dem Rahmengestell verbunden.

### Figur 14A

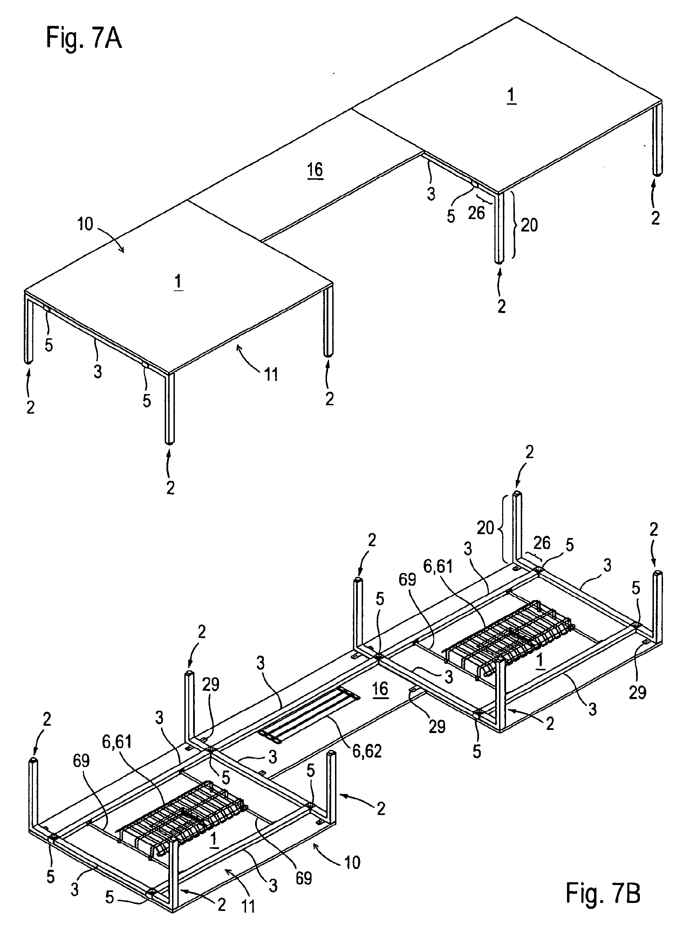

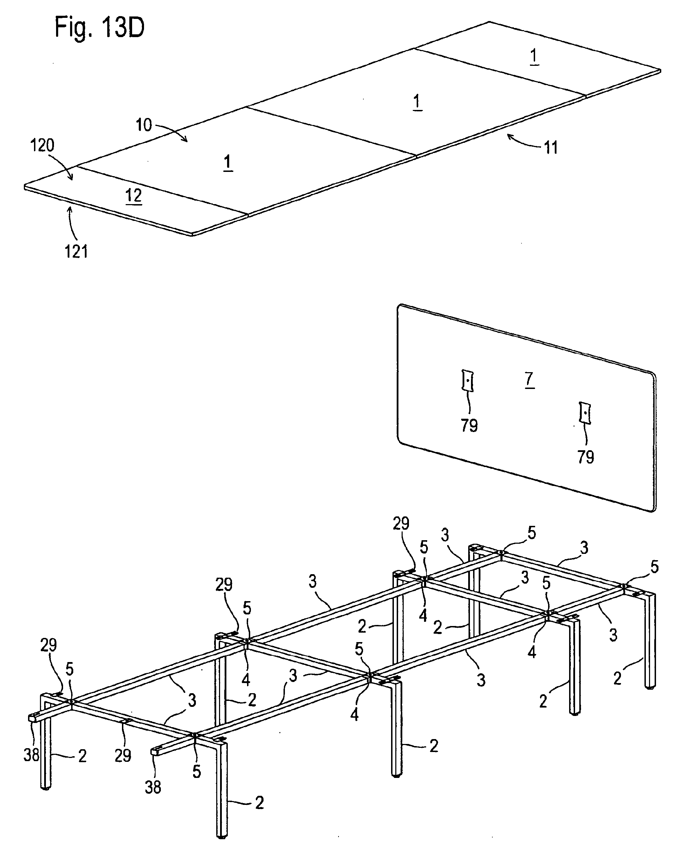

In Abweichung zum Untergestell gemäss Figur 13D hat man hier auf die Strebenfortsätze **38** verzichtet, und anstelle der zuvor mittig links eingebauten zwei Beine 2 mit der dazwischen eingefügten Strebe 3 wird nun ein einteiliges Doppelbein 28 mit je einem nach aussen ragenden Stützteil *erster Variante* 27 und daran angebrachten Befestigungselementen *erster Variante* 29 verwendet. Wie zuvor in Figur 7B werden Aufhängungen 69 für Kabelkörbe 61 und ein Kabelnetz 62 als Kabelhalterungen 6 verwendet. Zum Aufstellen auf der Tischplattenoberseite 10 sind Screens 15 vorgesehen.

### Figuren 14B und 14C

Das Untergestell entspricht jenem aus Figur 13C. Die funktionale und konstruktive Erweiterung besteht hier darin, dass die Tischplatte 1 einen Durchbruch hat, in welchen ein Verkabelungszugang 14 eingesetzt ist. Der rahmenartige Verkabelungszugang 14 hat Klappensegmente 141, die sich öffnen lassen. Unter dem Verkabelungszugang 14 kann sich eine Kabelhalterung 7, z.B. in Gestalt eines Kabelkorbs 61 oder eines Kabelnetzes 62, mit einer darin liegenden Steckdoseneinheit befinden. Am Verkabelungszugang 14 sind ferner Andockkonturen 140 - z.B. Sacklöcher - vorhanden, um darin die Arretierorgane 150 - z.B. Stifte - eines auf die Tischplattenoberseite 10 aufsetzbaren Screens 15 einzustecken. Der Screen 15 schirmt einander gegenüber liegende Arbeitsplätze ab und kann zugleich zum Anbringen von kleinen Behältnissen, Halterungen für Utensilien und Geräte oder Merkzetteln genutzt werden.

### Figur 16

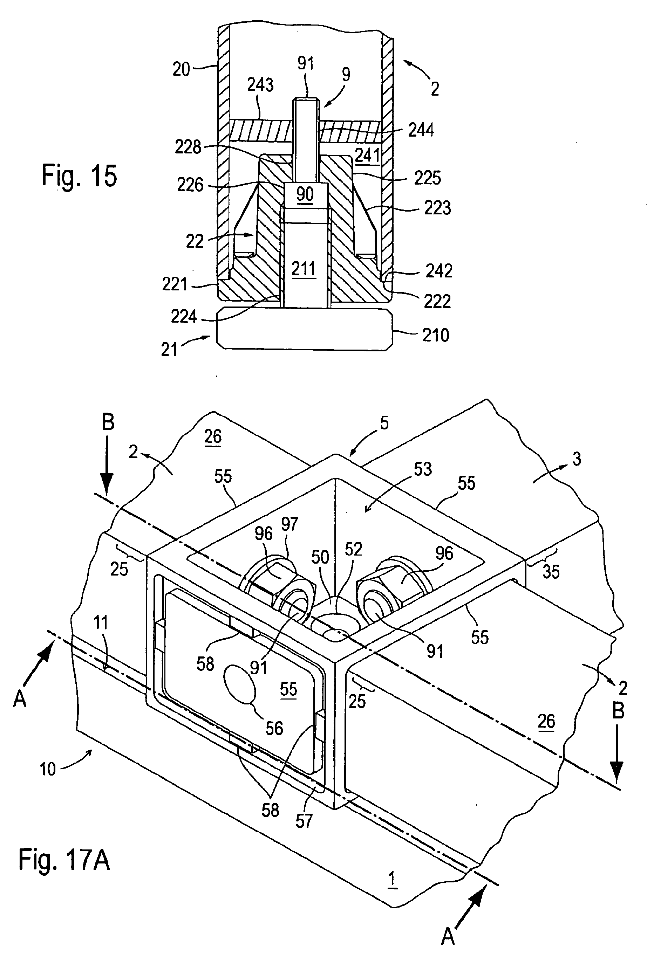

Hat man zur Erzielung einer grösseren Höhenpositionierung der Tischplatte 1 an das Fussteil 20 des Beins 2 ein Verlängerungsteil 4 angesetzt, so gestaltet sich die Anordnung aus Bodenelement 21, Adapter 22, Verlängerungsteil 4 und Fussteil 20 wie folgt. Der zum Aufsetzen auf den Untergrund bestimmte Gleiter 210 des Bodenelements 21 ragt mit seinem Gewindestift 211 höhenverstellbar in die Innengewindebohrung 224 des Adapters 22. Insoweit besteht Identität zur Darstellung in Figur 15. Vom Verlängerungsteil 4 ist der erste Anschluss 44 formschlüssig auf den Sockel 221 des Adapters 22 aufgesetzt. Hierbei ragen die Nasen 442 des Verlängerungsteils 4 in die Kerben 222 des Adapters 22 hinein. Nach oben kommen der zweite Anschluss 45 des Verlängerungsteils 4 mit dem ersten Anschluss 24 des Fussteils 20 aneinander zu liegen, wobei die Nasen 242 des Fussteils 20 in die Kerben 452 des Verlängerungsteils 4 eingreifen. Innerlich - hier nicht sichtbar - verwendet man eine Schraube 9 mit einem längeren Gewindebolzen 91, deren Kopf 90 im Sitz 226 des Schafts 225 ruht. Der Gewindebolzen 91 durchragt das Durchgangsloch 228 des Schafts 225 sowie das Verlängerungsteil 4 und greift in das Innengewinde 244 im Boden 243 ein, welcher den Hohlraum 241 im unteren Ende des Fussteils 20 abschliesst. Somit hält die Schraube 9 den Verbund aus Adapter 22, Verlängerungsteil 4 und Fussteil 20 zusammen.

### Figuren 17A bis 17C

An drei Seitenflächen 55 des Verbinders 5 sind die beiden einander gegenüberstehenden zweiten Anschlüsse 25 der Querteile 26 und dazu T-förmig der zweite Anschluss 35 der Strebe 3 mittels Gewindebolzen 91 und Muttern 96 befestigt. Hierbei kommt die Kante 250 des jeweiligen Querteils 26 in der zugewandten Nut 57 zu liegen, wobei die Stege 58 des Verbinders 5 von den Kerben 252 am zweiten Anschluss 25 umfasst werden. Von der Strebe 3 umfassen die im zweiten Anschluss 35 gelegenen Kerben 352 die Stege 58 der zugewandten Seitenfläche 55, und die Kante 350 ragt in deren Nut 57 hinein. Die Aussenseite der Grundfläche 50 ist der Tischplattenunterseite 11 zugewandt. Jeweils ein Gewindebolzen 91 mit aufgeschraubter Mutter 96 und vorgelegter Scheibe 97 liegt innerlich der drei Seitenflächen 55 an. Der jeweilige Gewindebolzen 91 durchragt ein drittes Durchgangsloch 56 in der betreffenden Seitenfläche 55 des Verbinders 5 und die Hohlräume 251,351 in den zweiten Anschlüssen 25 der beiden Querteile 26 bzw. im zugewandten zweiten Anschluss 35 der Strebe 3, um in die Innengewinde 254 in den Böden 253 der zweiten Anschlüsse 25 der Querteile 26 bzw. das Innengewinde 354 im Boden 353 des betreffenden zweiten Anschlusses 35 in der Strebe 3 einzugreifen. Ein solches Innengewinde 254,354 lässt sich durch ein in den Boden 253,353 eingeschnittenes Innengewinde oder eine auf dem Boden 253,353 fest angeordnete Mutter erzeugen. Die zunächst nicht belegte vierte Seitenfläche 55 wird man aus ästhetischen Gründen mit einem selbsthaltenden Deckel 54 verkleiden. Zur Stabilisierung der auf den Grundflächen 50 der Verbinder 5 ruhenden Tischplatte 1 wird es bei grösseren Dimensionen angebracht sein, zwischen der Tischplattenunterseite 11 und den Querteilen **26** sowie Streben **3,** welche gegenüber den Grundflächen **50** abgesenkt sind, Abstandselemente einzusetzen.

Gemäss der Figurenfolge ist die Offenseite **53** des Verbinders **5** bei einem aufgestellten Tisch dem Untergrund zugewandt, d.h. an der Tischplattenunterseite **11** liegt die Grundfläche **50** an. Kehrt man den Verbinder **5** um, so dass die Offenseite **53** der Tischplattenunterseite **11** zugewandt ist und die Grundfläche **50** zum Untergrund zeigt, ist das in der Grundfläche **50** vorhandene erste und die zweiten Durchgangslöcher **51,52** zum Anbringen von Trägern oder Behältnissen nutzbar, z.B. für eine CPU. Bei dieser Alternative wird zuletzt die Tischplatte **1** auf dem Untergestell montiert, um vorher Zugang über die Offenseite **53** der Verbinder **5** für die Montage der Verschraubungen **91,96,97** zu haben.

### Figuren 18A bis 19C

Abweichend zu den bisherigen Figuren sind an der Oberseite der Querteile **26** bzw. Strebenfortsätze **38** Schlitze **260** vorgesehen, um darin modifizierte Befestigungselemente *zweiter Variante* **29'** einzuhängen, welche an der jeweiligen Tischplattenunterseite **11,** z.B. mittels Schrauben **9,** verankert sind. Die am Befestigungselement **29'** vorhandenen beiden Nasen **290'** hintergreifen dabei die Schlitze **260** im Querteil **26** des jeweiligen Beins **2** bzw. die - hier nicht gezeigten - im entsprechenden Strebenfortsatz **38** vorhandenen Schlitze, welche um 90° versetzt zu den Schlitzen **260** im Querteil **26** angeordnet sind. Der Abstand zwischen den Nasen **290'** entspricht dem Abstand zwischen zwei in Längserstreckung des Querteils **26** verlaufenden Schlitzen **260.** Das Befestigungselement 29' hat den Nasen **290'** zurückversetzt eine Schulter **291',** wobei zwischen den Nasen **290'** und der Schulter **291'** ein Freischnitt **292'** vorgesehen ist. Auf Höhe des am Querteil **26** eingehängten Befestigungselements **29'** dient der Freischnitt **292'** zur Aufnahme des Randbereichs vom Querteil **26.** In der Schulter **291'** des Befestigungselements **29'** sind zwei voneinander beabstandete Langlöcher **298'** vorhanden, die dem Durchgriff von Schrauben **9** dienen. Beim Einhängen des Befestigungselements **29'** wird dieses zunächst dem Querteil **26** mit den Schlitzen **260** schräg angenähert, so dass die jeweilige Nase **290'** in die entsprechenden Schlitze **260** einfahren kann. Anschliessend wird das Befestigungselement 29' abgesenkt, so dass die Nase 290' innerlich des rechteckigen Querschnitts zu liegen kommt und quasi das Querteil 26 des Beins 2 hintergreift. Im eingehängten Zustand liegt das Befestigungselement 29' horizontal ausgerichtet, und im Freischnitt 292' ruht der Kantenbereich des Querteils 26 bzw. des Strebenfortsatzes 38.

Als Modifikation zum quasi einteiligen Doppelbein 28 (s. Figur 3B) ist zum Aufbau eines ähnlichen mehrteiligen Doppelbeins 28' an jedem Bein 2, am Übergang vom Fussteil 20 zum Querteil 26, ein Brückenteil 8 montiert, und zwischen beiden Brückenteilen 8 ist ein Mittelteil 23 positioniert.

An der Unterseite des Mittelteils 23 ist, den freien Enden zurückversetzt, jeweils eine Bohrung 230 vorgesehen. Das einzelne Brückenteil 8 greift einerseits in die jeweils benachbarte Bohrung 230 und andererseits als Schnappverbindung in das zugeordnete Fussteil 20 ein. Der Zusammenbau aus zwei Beinen 2, Mittelteil 23 und zwei Brückenteilen 8 erstreckt sich in einer Vertikalebene und ist zwischen den äusserlich an jedem Querteil 26 montierten Verbindern 5 unterhalb der Tischplatte 1 befestigt.

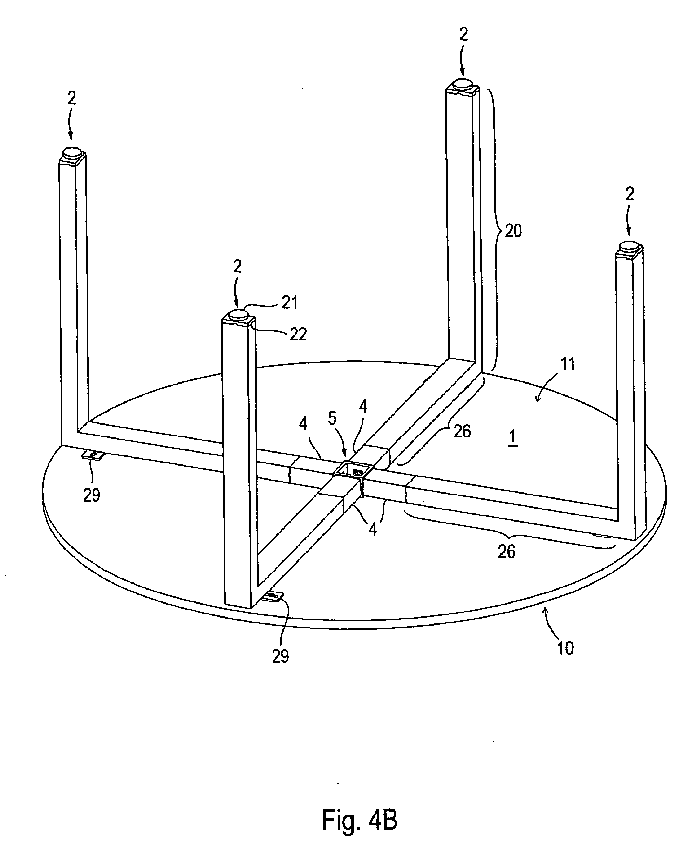

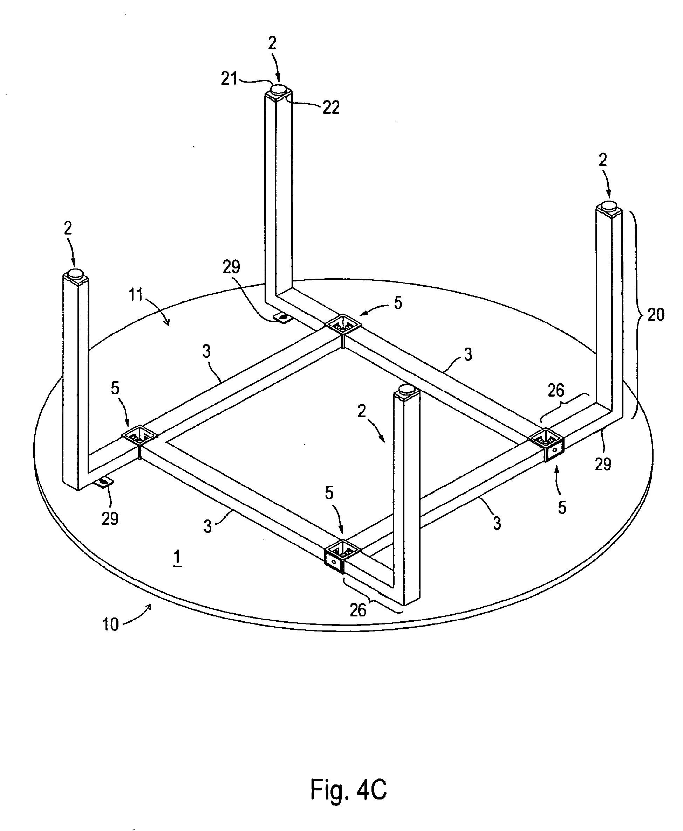

Das Stützteil *zweiter Variante* 27' hat zwei Ausleger 277', welche die zuvor beim Stützteil *erster Variante* 27 benötigten Befestigungselemente *erster Variante* 29 ersetzen (s. Figur 3B). An den Seitenflächen 55 eines Verbinders 5 lässt sich der zweite Anschluss 25 des Querteils 26 und/oder einer der beiden zweiten Anschlüsse 35 der Strebe 3 und/oder der zweite Anschluss 45 des Verlängerungsteils 4 und/oder der zweite Anschluss 275' des Stützteils *zweiter Variante* 27' jeweils mittels Gewindebolzen 91 und Mutter 96 befestigen. Dabei durchragt der Gewindebolzen 91 das dritte Durchgangsloch 56 im Verbinder 5, und die aufgeschraubte Mutter 96 mit vorgelegter Scheibe 97 liegt innerlich an der entsprechenden Seitenfläche 55 an. Am gegenüberliegenden Ende ist der Gewindebolzen 91 mit dem Innengewinde 254 im Boden 253 des zweiten Anschlusses 25 des Querteils 26 des Beins 2 bzw. mit dem Innengewinde 354 im Boden 353 des einen zweiten Anschlusses 35 der Strebe 3 in Eingriff. Sofern ein Verlängerungsteil 4 zwischen Verbinder 5 und Strebe 3 eingesetzt ist (s. Figur 4B), wird ein entsprechend in der Länge dimensionierter Gewindebolzen 91 benutzt.

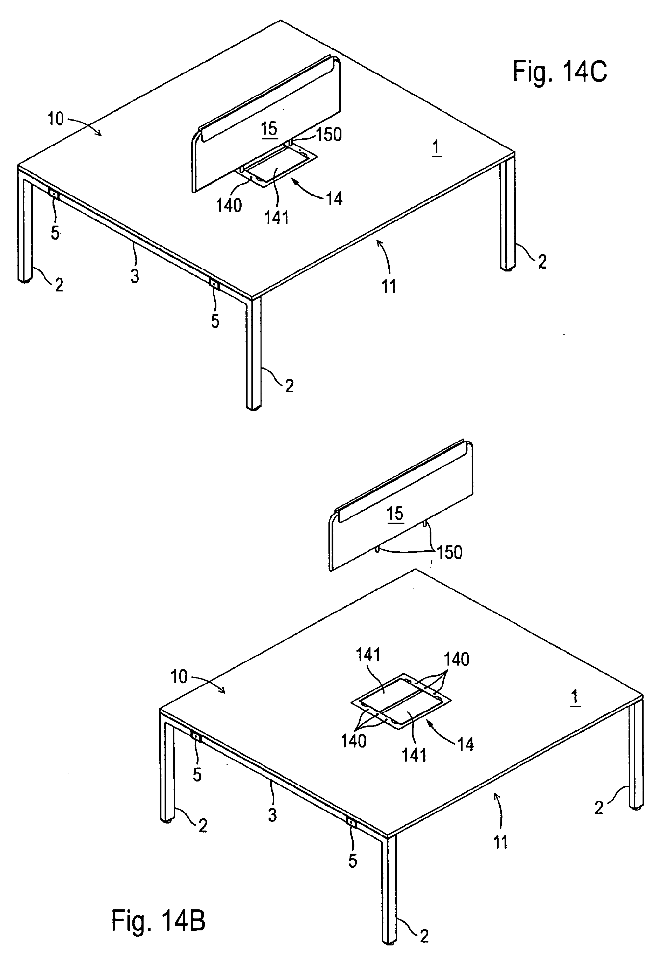

Die Tischaufbauten dieser Figurenfolge können mit einem Verkabelungszugang 14, wie zuvor in den Figuren 14B und 14C, und Stützelementen 19, wie zuvor in Figur 2B, ausgestattet sein.

### Figuren 20A und 20B

Das Brückenteil 8 kommt beim Einbau eines mehrteiligen Doppelbeins 28' zum Einsatz. Das Brückenteil 8 hat eine Wandung 80, von der einerseits zwei parallel beabstandete Seitenflächen 85 abgehen, zwischen denen sich am unteren Ende eine Bodenfläche 84 erstreckt. Wandung 80, Seitenflächen 85 und Bodenfläche 84 bilden die Aufnahme 83 für ein Ende des Mittelteils 23. Von der Bodenfläche 84 erhebt sich ein Zapfen 830, der in die jeweilige Bohrung 230 am Mittelteil 23 eingreift. Von der Wandung 80 erstrecken sich andererseits, quasi in gegenläufiger Richtung zu den Seitenflächen 85, zwei ebenso parallel beabstandete, flexible Fortsätze 81, die an den freien Enden je eine Hakenkontur 82 besitzen. Wandung 80, Fortsätze 81 und Hakenkonturen 82 bilden die Aufnahme 86 für den Eckbereich von Fussteil 20 und Querteil 26 des Beins 2. Die Hakenkonturen 82 weiten sich beim Einfahren der Eckbereiche und greifen in Endposition hinter das Fussteil 20.

### Figuren 21A und 21 B

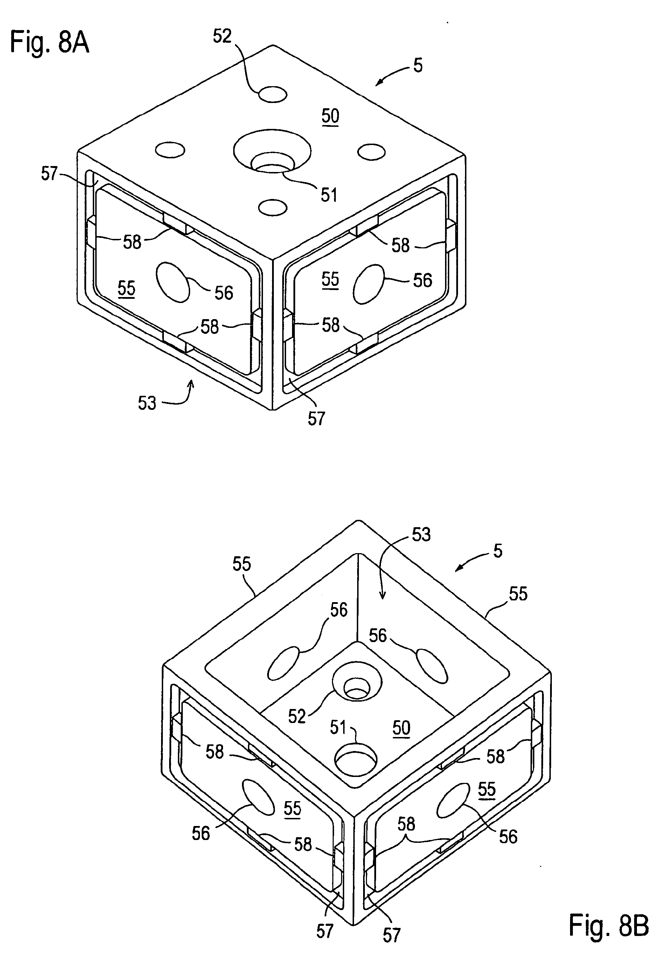

Das Stützteil *zweiter Variante* 27' hat an seinem freien Ende - in identischer Ausbildung zum zweiten Anschluss 25 am Bein 2, zum zweiten Anschluss 35 an der Strebe 3 und zum zweiten Anschluss 45 am Verlängerungsteil 4 - einen zweiten Anschluss 275' mit einer umlaufenden Kante 270', in welcher vier, jeweils um 90° versetzte rechteckige Kerben 272' vorgesehen sind, die sich zum Stützteil zweiter Variante 27' hin erstrecken. Die Kante 270' und Kerben 272' sind komplementär zur am Verbinder 5 vorhandenen Nut 57 mit den Stegen 58 (s. Figur 8A) sowie zur am Verlängerungsteil 4 vorhandenen Kante 440 mit den Nasen 442 (s. Figur 11). Innerhalb der Kante 270' ist ein Boden 273' eingesetzt, in dem ein Innengewinde 274' vorgesehen ist. In Erstreckungsrichtung des Innengewindes 274' ist ein Hohlraum 271' vorhanden, in den ein Ende des Gewindebolzens 91 ragt. Im Hohlraum 271' kommen ferner die auf den Gewindebolzen 91 aufgesteckte Scheibe 97 und die aufgeschraubte Mutter 96 zu liegen.

## Patentansprüche

1. Tischkonstruktion umfassend:
a) ein Untergestell, das sich aus Beinen (2) zusammensetzt;
b) eine vom Untergestell getragene Tischplatte (1); und
c) zumindest einen Verbinder (5), an dem die Beine (2) befestigt sind; wobei
d) ein Bein (2) ein sich abwärts erstreckendes Fussteil (20) hat, an dessen unterem Ende ein erster Anschluss (24) angeordnet ist;
e) vom oberen Ende des Fussteils (20) des Beins (2) ein Querteil (26) abgeht, das zur Anordnung unterhalb der Tischplatte (1) bestimmt ist und an seinem freien Ende einen zweiten Anschluss (25) aufweist;
f) der Verbinder (5) von quaderförmiger Gestalt ist, der vier Seitenflächen (55) hat, die zum Befestigen von zweiten Anschlüssen (25) von Beinen (2) dienen, **dadurch gekennzeichnet, dass**
g) der erste Anschluss (24) am Bein (2) von einer das Ende des Fussteils (20) umlaufenden Kante (240) gebildet wird, von der sich in fortsetzender Längsrichtung des Fussteils (20) Nasen (242) erstrecken; und
h) der zweite Anschluss (25) am Bein (2) von einer das Ende des Querteils (26) umlaufenden Kante (250) gebildet wird, von der sich in rückläufiger Längsrichtung des Querteils (26) Kerben (252) erstrecken.

2. Tischkonstruktion nach Anspruch 1, **dadurch gekennzeichnet, dass**
a) das Untergestell ferner Streben (3), Verlängerungsteile (4) und Adapter (22) aufweist;
b) eine Strebe (3) an beiden Enden je einen zweiten Anschluss (35) besitzt, der zum Befestigen am Verbinder (5) dient;
c) sich der Adapter (22) mit dem ersten Anschluss (24) des Fussteils (20) oder mit einem ersten Anschluss (44) eines Verlängerungsteils (4) zusammenfügen lässt;
d) der erste Anschluss (44) des Verlängerungsteils (4) sich alternativ mit einem zweiten Anschluss (35) der Strebe (3) zusammenfügen lässt; und
e) das Verlängerungsteil (4) einen zweiten Anschluss (45) aufweist, der sich mit dem ersten Anschluss (24) des Fussteils (20) oder mit einer Seitenfläche (55) des Verbinders (5) zusammenfügen lässt.

3. Tischkonstruktion nach einem der Ansprüche 1 oder 2, **dadurch gekennzeichnet, dass**
a) die Beine (2), die Streben (3) und die Verlängerungsteile (4) aus Vierkanthohlprofil mit identischem Querschnitt bestehen; und
b) das Verlängerungsteil (4) einen durchgehenden Hohlraum (441,451) hat.

4. Tischkonstruktion nach einem der Ansprüche 1 bis 3, **dadurch gekennzeichnet, dass** die zweiten Anschlüsse (35) an der Strebe (3) jeweils von einer das betreffende Ende der Strebe (3) umlaufenden Kante (350) gebildet werden, von der sich in rückläufiger Längsrichtung der Strebe (3) Kerben (352) erstrecken.

5. Tischkonstruktion nach einem der Ansprüche 1 bis 4, **dadurch gekennzeichnet, dass**
a) der erste Anschluss (44) am Verlängerungsteil (4) von einer das Ende des Verlängerungsteils (4) umlaufenden Kante (440) gebildet wird, von der sich in fortsetzender Längsrichtung des Verlängerungsteils (4) Nasen (442) erstrecken; und
b) der zweite Anschluss (45) am Verlängerungsteil (4) von einer das Ende des Verlängerungsteils (4) umlaufenden Kante (450) gebildet wird, von der sich in rückläufiger Längsrichtung des Verlängerungsteils (4) Kerben (452) erstrecken.

6. Tischkonstruktion nach einem der Ansprüche 1 bis 5, **dadurch gekennzeichnet, dass**
a) der Verbinder (5) ausser den vier Seitenflächen (55) eine Grundfläche (50) und eine dazu gegenüber liegende Offenseite (53) hat;
b) die Seitenflächen (55) ein zentrisches drittes Durchgangsloch (56) und äusserlich je eine umlaufende Nut (57) aufweisen, welche von erhabenen Stegen (58) unterbrochen wird;
c) die Nut (57) der Aufnahme der Kante (250) des zweiten Anschlusses (25) am Querteil **(26)** des Beins **(2)** oder der Kante **(350)** des Anschlusses **(35)** der Strebe **(3)** oder der Kante **(450)** des zweiten Anschlusses **(45)** des Verlängerungsteils **(4)** dient;
d) im zusammengebauten Zustand die Stege **(58)** in den Kerben **(252)** des zweiten Anschlusses **(25)** am Querteil **(26)** des Beins **(2)** oder in den Kerben **(352)** eines zweiten Anschlusses **(35)** der Strebe **(3)** oder in den Kerben **(452)** des zweiten Anschlusses **(45)** des Verlängerungsteils **(4)** formschlüssig zu liegen kommen; und
e) das dritte Durchgangsloch **(56)** von einem Gewindebolzen **(91)** durchragt wird, der innerlich des Verbinders **(5)** mit einer Mutter **(96)** versehen ist und nach aussen in ein Innengewinde **(254,354)** am zweiten Anschluss **(25)** am Querteil **(26)** des Beins **(2)** oder am Anschluss **(35)** der Strebe **(3)** eingreift.

7. Tischkonstruktion nach einem der Ansprüche 1 bis 6, **dadurch gekennzeichnet, dass** das Innengewinde **(254,354)** am zweiten Anschluss **(25)** am Querteil **(26)** des Beins **(2)** und an den zweiten Anschlüssen **(35)** der Strebe **(3)** an einem Boden **(253,353)** vorgesehen ist, der einen nach aussen mündenden Hohlraum **(251,351)** am Querteil **(26)** bzw. an der Strebe **(3)** begrenzt.

8. Tischkonstruktion nach einem der Ansprüche 1 bis 7, **dadurch gekennzeichnet, dass** in der Grundfläche **(50)** des Verbinders **(5)** zumindest ein erstes Durchgangsloch **(51)** und optional zweite Durchgangslöcher **(52)** vorhanden sind, die sich zum Anbringen von Trägern oder Behältnissen nutzen lassen, z.B. für eine CPU, oder zur Montage eines Stützfusses.

9. Tischkonstruktion nach einem der Ansprüche 1 oder 5, **dadurch gekennzeichnet, dass**
a) der Adapter **(22)** einen Sockel **(221)** mit einer umlaufenden Schulter **(220)** besitzt, von der sich Kerben **(222)** in den Sockel **(221)** hinein erstrecken;
b) auf der Schulter **(220)** des Sockels **(221)** die Kante **(240)** am ersten Anschluss **(24)** des Fussteils **(20)** des Beins **(2)** oder die Kante **(440)** am ersten Anschluss **(44)** des Verlängerungsteils **(4)** aufsitzt; und
c) die Nasen **(242)** am ersten Anschluss **(24)** des Fussteils **(20)** des Beins **(2)** oder die Nasen **(442)** am ersten Anschluss **(44)** des Verlängerungsteils **(4)** in die Kerben **(222)** im Sockel **(221)** formschlüssig eingreifen.

10. Tischkonstruktion nach Anspruch 9, **dadurch gekennzeichnet, dass**
a) sich vom Sockel **(221)** des Adapters **(22)** zentrisch ein Schaft **(225)** erhebt;
b) der Schaft **(225)** innerlich einen Sitz **(226)** hat, von dem sich ein Durchgangsloch **(228)** erstreckt, das am freien Ende des Schafts **(225)** mündet, und sich vom Sitz **(226)** ein Innengewinde **(224)** erstreckt, das am Sockel **(221)** mündet;
c) in das Innengewinde **(224)** ein höhennivellierbares Bodenelement **(21)** mit seinem Gewindestift **(211)** eindrehbar ist; und
d) im Sitz **(226)** des Schafts **(225)** ein Kopf **(90)** einer Schraube **(9)** zu liegen kommt, deren Gewindebolzen **(91)** das Durchgangsloch **(228)** im Schaft **(225)** durchragt und in ein Innengewinde **(244)** am ersten Anschluss **(24)** des Fussteils **(20)** des Beins **(2)** eingreift.

11. Tischkonstruktion nach Anspruch 10, **dadurch gekennzeichnet, dass**
a) das Innengewinde **(244)** am ersten Anschluss **(24)** des Fussteils **(20)** des Beins (2) an einem Boden **(243)** vorgesehen ist, der einen nach aussen mündenden Hohlraum **(241)** am Fussteil **(20)** begrenzt; und
b) im Hohlraum **(241)** am Fussteil **(20)** oder bei Verwendung eines am Fussteil **(20)** angesetzten Verlängerungsteils **(4)** in dessen durchgehenden Hohlraum **(441)** der Schaft **(225)** des Adapters **(22)** zu liegen kommt.

12. Tischkonstruktion nach Anspruch 11, **dadurch gekennzeichnet, dass**
a) zwei in einer Ebene, zueinander beabstandet positionierte Beine **(2),** deren Querteile **(26)** voneinander wegweisend fluchten, mit einem Mittelteil **(23),** das vorzugsweise in der Flucht der Querteile **(26)** eingefügt ist, ein Doppelbein **(28,28')** bilden;
b) zum Zusammenbau eines Doppelbeins **(28')** das Mittelteil **(23)** an seinen beiden Enden mit jeweils einem Brückenteil (8) als Verbindung zum Eckbereich von Fussteil (20) und Querteil (26) des jeweils zugeordneten Beins (2) versehen sein kann; und
c) als Abschnitte der Strebe (3) Strebenfortsätze (38) und Stützteile (27,27') vorgesehen sind, die nur an einem Ende den zweiten Anschluss (25,275') mit der Kante (250,270'), dem Hohlraum (251,271'), den Kerben (252,272'), dem Boden (253,273') und dem Innengewinde (254,274') zum Befestigen an einer Seitenfläche (55) am Verbinder (5) aufweisen.

13. Tischkonstruktion nach einem der Ansprüche 1 bis 12, **dadurch gekennzeichnet, dass**
a) zur Fixierung der Tischplatte (1) auf dem Untergestell Befestigungselemente (29,29') vorgesehen sind;
b) die Befestigungselemente (29) mittels Schrauben einerseits auf einer Oberseite der Querteile (26) der Beine (2) bzw. der Streben (3) und andererseits an der Unterseite (11,121) von Tischplatte (1) oder Anbauplatte (12) fixiert sind; oder
c) zur Verbindung zwischen den Befestigungselementen (29') und den Querteilen (26) der Beine (2) und/oder den Streben (3) und/oder den Strebenfortsätzen (38) auf den Oberseiten von Querteilen (26), Streben (3) und Strebenfortsätzen (38) Schlitze (260) angeordnet sind, in die sich an den Befestigungselementen (29') vorhandene Nasen (290') einhängen lassen.

14. Tischkonstruktion nach Anspruche 1 bis 13, **dadurch gekennzeichnet, dass**
a) die Tischplatte (1) einen Durchbruch hat, in welchen ein Verkabelungszugang (14) eingesetzt ist, der zu öffnende Klappensegmente (141) besitzt, um an die Kabelhalterungen (6) und eine eventuelle Steckdoseneinheit zu gelangen;
b) am Verkabelungszugang (14) Andockkonturen (140) - z.B. Sacklöcher - vorhanden sind, um darin die Arretierorgane (150) - z.B. Stifte - eines auf die Tischplattenoberseite (10) aufsetzbaren Screens (15) und/oder von Gerätehalterungen einzustecken, wobei der Screen (15) den Arbeitsplatz abschirmt und zugleich zum Anbringen von kleinen Behältnissen, Halterungen für Utensilien und Geräte oder Merkzetteln nutzbar ist;
c) unterhalb der Tischplatte **(1),** die sich mit Anbauplatten **(12)** verlängern lässt, Kabelhalterungen **(6)** in Gestalt von Körben **(61)**, Bändern, Netzen **(62)** oder Haken angeordnet sein können; und
d) die Tischkonstruktion mit einer senkrecht stehenden Abdeckung **(7)** ergänzt werden kann, die sich an aussen liegenden Verbindern **(5)** befestigen lässt.

## Claims

1. Table construction comprising:
a) a lower framework, which is made up of leg structures **(2);**
b) a table top **(1),** which is borne by the lower framework; and
c) at least one connector **(5),** on which the leg structures **(2)** are fastened; wherein
d) a leg structure **(2)** has a downwardly extending leg part **(20),** a first connection **(24)** being arranged at the lower end thereof;
e) extending from the upper end of the leg part **(20)** of the leg structure **(2)** is a transverse part **(26),** which is intended for arranging beneath the table top **(1)** and has a second connection **(25)** at its free end;
f) the connector **(5)** is of cuboidal configuration, having four side surfaces **(55)** which serve for the fastening of second connections **(25)** of leg structures **(2), characterised in that**
g) the first connection **(24)** on the leg structure **(2)** is formed by an edge **(240)** which runs around the end of the leg part **(20)** and from which noses **(242)** extend in a continuing longitudinal direction of the leg part **(20);** and
h) the second connection **(25)** on the leg structure **(2)** is formed by an edge **(250)** which runs around the end of the transverse part **(26)** and from which notches **(252)** extend in the set-back longitudinal direction of the transverse part **(26).**

2. Table construction according to Claim 1, **characterised in that**
a) the lower framework also has straps **(3),** extension parts **(4)** and adapters **(22);**
b) a strut **(3)** has, at each of its two ends, a second connection **(35),** which serves for fastening on the connector **(5);**
c) the adapter **(22)** can be joined together with the first connection **(24)** of the leg part **(20)** or with a first connection **(44)** of an extension part **(4);**
d) the first connection **(44)** of the extension part **(4)** can alternatively be joined together with a second connection **(35)** of the strut **(3);** and
e) the extension part **(4)** has a second connection **(45),** which can be joined together with the first connection **(24)** of the leg part **(20)** or with a side surface **(55)** of the connector **(5).**

3. Table construction according to either of Claims 1 and 2, **characterised in that**
a) the leg structures **(2),** the struts **(3)** and the extension parts **(4)** comprise a quadrilateral hollow profile of identical cross section; and
b) the extension part **(4)** has a cavity **(441,451)** passing right through it.

4. Table construction according to one of Claims 1 to 3, **characterised in that** the second connections **(35)** on the strut **(3)** are formed in each case by an edge **(350)** which runs around the relevant end of the strut **(3)** and from which notches **(352)** extend in the set-back longitudinal direction of the strut **(3).**

5. Table construction according to one of Claims 1 to **4, characterised in that**
a) the first connection **(44)** on the extension part **(4)** is formed by an edge **(440)** which runs around the end of the extension part **(4)** and from which noses **(442)** extend in the continuing longitudinal direction of the extension part **(4);** and
b) the second connection **(45)** on the extension part **(4)** is formed by an edge **(450)** which runs around the end of the extension part **(4)** and from which notches **(452)** extend in the set-back longitudinal direction of the extension part **(4).**

6. Table construction according to one of Claims 1 to 5, **characterised in that**
a) the connector **(5),** in addition to the four side surfaces **(55),** has a base surface **(50)** and an open side **(53),** located opposite;
b) the side surfaces **(55)** have a third through-hole **(56)** in the centre and, on the outside, an all-round groove **(57)** in each case, this groove being interrupted by elevated crosspieces **(58);**
c) the groove **(57)** serves for accommodating the edge **(25)** of the second connection **(25)** on the transverse part **(26)** of the leg structure **(2)** or the edge **(350)** of the connection **(35)** of the strut **(3)** or the edge **(450)** of the second connection **(45)** of the extension part **(4);**
d) in the assembled state, the crosspieces **(58)** end up located in a form-fitting manner in the notches **(252)** of the second connection **(25)** on the transverse part **(26)** of the leg structure **(2)** or in the notches **(352)** of a second connection **(35)** of the strut **(3)** or in the notches **(452)** of the second connection **(45)** of the extension part **(4);** and
e) the third through-hole **(56)** has a threaded bolt **(91)** projecting through it, this threaded bolt being provided, inside the connector **(5),** with a nut **(96)** and engaging in the outward direction in an internal thread **(254,354)** on the second connection **(25)** on the transverse part **(26)** of the leg structure **(2)** or on the connection (35) of the strut **(3).**

7. Table construction according to one of Claims 1 to 6, **characterised in that** the internal thread **(254,354)** on the second connection **(25)** on the transverse part **(26)** of the leg structure (2) and on the second connections **(35)** of the strut **(3)** is provided on a base **(253,353),** which bounds an outwardly opening-out cavity **(251,351)** on the transverse part **(26)** or on the strut **(3),** respectively.

8. Table construction according to one of Claims 1 to 7, **characterised in that** the base surface **(50)** of the connector **(5)** contains at least one first through-hole **(51)** and optionally second through-holes **(52),** which can be used in order to fit carriers or containers, e.g. for a CPU, or for mounting a supporting leg.

9. Table construction according to either of Claims 1 and 5, **characterised in that**
a) the adapter **(22)** has a pedestal **(221)** with an all-round shoulder **(220),** from which notches **(222)** extend into the pedestal **(221)**;
b) the edge **(240)** on the first connection **(24)** of the leg part **(20)** of the leg structure **(2)** or the edge **(440)** on the first connection **(44)** of the extension part (4) is seated on the shoulder (220) of the pedestal (221); and
c) the noses (242) on the first connection (24) of the leg part (20) of the leg structure (2) or the noses (442) on the first connection (44) of the extension part (4) engage in a form-fitting manner in the notches (222) in the pedestal (221).

10. Table construction according to Claim 9, **characterised in that**
a) a shank (225) rises up centrally from the pedestal (221) of the adapter (22);
b) the shank (225), on its inside, has a seat (226), from which extends a through-hole (228), which opens out at the free end of the shank (225), and an internal thread (224), which opens out at the pedestal (221), extends from the seat (226);
c) a levellable-height floor element (21) can be screwed into the internal thread (224) by way of its threaded pin (211); and
d) a head (90) of a screw (9) ends up located in the seat (226) of the shank (225), the threaded bolt (91) of this screw projecting through the through-hole (228) in the shank (225) and engaging in an internal thread (244) on the first connection (24) of the leg part (20) of the leg structure (2).

11. Table construction according to Claim 10, **characterised in that**
a) the internal thread (244) on the first connection (24) of the leg part (20) of the leg structure (2) is provided on a base (243), which bounds an outwardly opening-out cavity (241) on the leg part (20); and
b) the shank (225) of the adapter (22) ends up located in the cavity (241) on the leg part (20) or, if use is made of an extension part (4) attached to the leg part (20), in the right-through cavity (441) of the extension part (4).

12. Table construction according to Claim 11, **characterised in that**
a) two leg structures (2) which are spaced apart from one another in a single plane, and of which the transverse parts (26) are oriented away from one another in alignment, and a central part (23), which is introduced preferably in alignment with the transverse parts (26), form a double leg structure (28,28');
b) in order to assemble a double leg structure **(28'),** the central part **(23)** may be provided, at each of its two ends, with a bridge part **(8)** as a connection to the corner region of the leg part **(20)** and transverse part **(26)** of the respectively associated leg structure **(2);** and
c) portions of the strut **(3)** provided are strut continuations **(38)** and supporting parts **(27,27'),** which, only at one end, have the second connection **(25, 275')** with the edge **(250,270'),** the cavity **(251,271'),** the notches **(252,272'),** the base **(253,273')** and the internal thread **(254,274')** for fastening on a side surface (55) on the connector **(5).**

13. Table construction according to one of Claims 1 to 12, **characterised in that**
a) fastening elements **(29,29')** are provided for fixing the table top **(1)** on the lower framework;
b) the fastening elements **(29)** are fixed by means of screws, on the one hand, on an upper side of the transverse parts **(26)** of the leg structures **(2)** and/or of the struts **(3)** and, on the other hand, on the underside **(11,121)** of the table top (1) or add-on panel **(12);** or
c) for connection between the fastening elements **(29')** and the transverse parts **(26)** of the leg structures **(2)** and/or the struts **(3)** and/or the strut continuations **(38),** slots **(260)** are arranged on the upper sides of transverse parts **(26),** struts **(3)** and strut continuations **(38),** and noses (290') which are present on the fastening elements **(29')** can be fitted into these slots.

14. Table construction according to Claims 1 to 13, **characterised in that**
a) the table top **(1)** has a through-passage into which is inserted a cabling-access means **(14),** which has openable flap segments **(141),** in order to reach the cable holders **(6)** and a possible socket unit;
b) docking contours **(140) -** e.g. blind holes - are present on the cabling-access means **(14),** in order for the arresting means **(150)** - e.g. pins - of a screen **(15),** which can be positioned on the table-top upper side **(10),** and/or equipment holders to be plugged into the same, wherein the screen **(15)** screens the workstation and, at the same time, can be used in order to fit small containers, holders for utensils and equipment or notes;
c) cable holders **(6)** in the form of racks **(61),** belts, meshes **(62)** or hooks may be arranged beneath the table top (**1**), which can be extended with add-on panels **(12);** and
d) the table construction can be supplemented with a vertically positioned covering **(7),** which can be fastened on externally located connectors **(5).**

## Revendications

1. Construction de table, comprenant:
a) un châssis inférieur, qui se compose de pieds **(2);**
b) un plateau de table **(1)** porté par le châssis inférieur; et
c) au moins un connecteur **(5),** auquel les pieds **(2)** sont fixés; dans laquelle
d) un pied **(2)** comporte une partie de pied **(20)** qui s'étend vers le bas, à l'extrémité inférieure de laquelle est disposé un premier raccord **(24);**
e) une partie transversale **(26)** part de l'extrémité supérieure de la partie de pied **(20)** du pied **(2),** et est destinée à s'agencer en dessous du plateau de table **(1)** et présente à son extrémité libre un deuxième raccord **(25);**
f) le connecteur **(5)** est de forme parallélépipédique, qui comporte quatre faces latérales **(55),** qui servent pour la fixation de deuxièmes raccords **(25)** de pieds **(2), caractérisée en ce que**
g) le premier raccord **(24)** est formé sur le pied **(2)** par un bord **(240)** entourant l'extrémité de la partie de pied **(20),** à partir duquel des ergots **(242)** s'étendent dans le prolongement de la direction longitudinale de la partie de pied **(20);** et
h) le deuxième raccord **(25)** est formé sur le pied **(2)** par un bord **(250)** entourant l'extrémité de la partie transversale **(26),** à partir duquel des encoches **(252)** s'étendent dans la direction longitudinale opposée de la partie transversale **(26).**

2. Construction de table selon la revendication 1, **caractérisée en ce que**:
a) le châssis inférieur présente en outre des entretoises **(3),** des parties de prolongement **(4)** et des adaptateurs **(22);**
b) une entretoise **(3)** possède aux deux extrémités chaque fois un deuxième raccord **(35),** qui sert pour la fixation au connecteur **(5);**
c) l'adaptateur **(22)** peut être assemblé au premier raccord **(24)** de la partie de pied **(20)** ou à un premier raccord **(44)** d'une partie de prolongement **(4);**
d) le premier raccord **(44)** de la partie de prolongement **(4)** peut en variante être assemblé à un deuxième raccord **(35)** de l'entretoise **(3);** et
e) la partie de prolongement **(4)** présente un deuxième raccord **(45),** qui peut être assemblé au premier raccord **(24)** de la partie de pied **(20)** ou à une face latérale **(55)** du connecteur **(5).**

3. Construction de table selon l'une quelconque des revendications 1 ou 2, **caractérisée en ce que**:
a) les pieds **(2),** les entretoises **(3)** et les parties de prolongement **(4)** se composent de profilés creux carrés de section transversale identique; et
b) la partie de prolongement **(4)** présente un espace creux continu **(441,451).**

4. Construction de table selon l'une quelconque des revendications 1 à 3, **caractérisée en ce que** les deuxièmes raccords **(35)** sont formés sur l'entretoise **(3)** chaque fois par un bord **(350)** entourant l'extrémité concernée de l'entretoise **(3),** à partir duquel des encoches **(352)** s'étendent dans la direction longitudinale opposée de l'entretoise **(3).**

5. Construction de table selon l'une quelconque des revendications 1 à 4, **caractérisée en ce que**:
a) le premier raccord **(44)** est formé sur la partie de prolongement **(4)** par un bord **(440)** entourant l'extrémité de la partie de prolongement **(4),** à partir duquel des ergots **(442)** s'étendent dans le prolongement de la direction longitudinale de la partie de prolongement **(4);** et
b) le deuxième raccord **(45)** est formé sur la partie de prolongement **(4)** par un bord **(450)** entourant l'extrémité de la partie de prolongement **(4),** à partir duquel des encoches **(452)** s'étendent dans la direction longitudinale opposée de la partie de prolongement **(4).**

6. Construction de table selon l'une quelconque des revendications 1 à 5, **caractérisée en ce que**:
a) le connecteur **(5)** présente, en plus des quatre faces latérales **(55),** une face de base **(50)** et un côté supérieur ouvert **(53)** opposé à celle-ci;
b) les faces latérales **(55)** présentent un troisième trou traversant centré **(56)** et extérieurement chaque fois une rainure périphérique **(57),** qui est interrompue par des nervures surélevées **(58);**
c) la rainure **(57)** sert à recevoir le bord **(250)** du deuxième raccord **(25)** sur la partie transversale **(26)** du pied **(2)** ou le bord **(350)** du raccord **(35)** de l'entretoise **(3)** ou le bord **(450)** du deuxième raccord **(45)** de la partie de prolongement **(4);**
d) à l'état assemblé, les nervures **(58)** viennent se placer en complémentarité de forme dans les encoches **(252)** du deuxième raccord **(25)** sur la partie transversale **(26)** du pied **(2)** ou dans les encoches **(352)** d'un deuxième raccord **(35)** de l'entretoise (3) ou dans les encoches **(452)** du deuxième raccord **(45)** de la partie de prolongement **(4);** et
e) le troisième trou traversant **(56)** est traversé par un goujon fileté **(91),** qui est muni d'un écrou **(96)** à l'intérieur du connecteur **(5)** et s'engage vers l'extérieur dans un filet intérieur **(254,354)** sur le deuxième raccord **(25)** sur la partie transversale **(26)** du pied (2) ou sur le raccord **(35)** de l'entretoise **(3).**

7. Construction de table selon l'une quelconque des revendications 1 à 6, **caractérisée en ce que** le filet intérieur **(254,354)** est prévu sur le deuxième raccord **(25)** sur la partie transversale **(26)** du pied **(2)** et sur les deuxièmes raccords **(35)** de l'entretoise **(3)** sur un fond **(253,353),** qui limite un espace creux **(251,351)** débouchant vers l'extérieur sur la partie transversale **(26)** ou sur l'entretoise **(3).**

8. Construction de table selon l'une quelconque des revendications 1 à 7, **caractérisée en ce qu'**il se trouve dans la face de base **(50)** du connecteur **(5)** au moins un premier trou traversant **(51)** et en option un deuxième trou traversant **(52),** qui peuvent être utilisés pour la pose de supports ou de récipients, par exemple pour une UCT, ou pour le montage d'un pied de soutien.

9. Construction de table selon l'une quelconque des revendications 1 ou 5, **caractérisée en ce que**:
a) l'adaptateur **(22)** possède un socle **(221)** avec un épaulement périphérique **(220),** à partir duquel des encoches **(222)** s'étendent vers l'intérieur du socle **(221)**;
b) le bord **(240)** sur le premier raccord **(24)** de la partie de pied **(20)** du pied **(2)** ou le bord **(440)** sur le premier raccord **(44)** de la partie de prolongement **(4)** repose sur l'épaulement **(220)** du socle **(221);** et
c) les ergots **(242)** sur le premier raccord **(24)** de la partie de pied **(20)** du pied **(2)** ou les ergots **(442)** sur le premier raccord **(44)** de la partie de prolongement **(4)** s'engagent en complémentarité de forme dans les encoches **(222)** dans le socle **(221).**

10. Construction de table selon la revendication 9, **caractérisée en ce que**:
a) un arbre **(225)** se dresse au centre du socle **(221)** de l'adaptateur **(22);**
b) l'arbre **(225)** présente intérieurement un siège **(226)**, à partir duquel s'étend un trou traversant **(228)** qui débouche à l'extrémité libre de l'arbre **(225),** et un filet intérieur **(224),** qui débouche sur le socle **(221),** s'étend à partir du siège **(226)**;
c) un élément de fond réglable en hauteur **(21)** peut être vissé avec son goujon fileté **(211)** dans le filet intérieur **(224);** et
d) une tête (90) d'une vis **(9)** vient se placer dans le siège **(226)** de l'arbre **(225),** et son goujon fileté **(91)** traverse le trou traversant **(228)** dans l'arbre **(225)** et s'engage dans un filet intérieur **(244)** sur le premier raccord **(24)** de la partie de pied **(20)** du pied **(2).**

11. Construction de table selon la revendication 10, **caractérisée en ce que**:
a) le filet intérieur **(244)** sur le premier raccord **(24)** de la partie de pied **(20)** du pied (2) est prévu sur un fond **(243),** qui limite un espace creux **(241)** débouchant vers l'extérieur sur la partie de pied **(20);** et
b) l'arbre **(225)** de l'adaptateur **(22)** vient se placer dans l'espace creux **(241)** sur la partie de pied **(20)** ou, en cas d'utilisation d'une partie de prolongement **(4)** posée sur la partie de pied **(20),** dans l'espace creux continu **(441)** de celle-ci.

12. Construction de table selon la revendication 11, **caractérisée en ce que**:
a) deux pieds **(2)** positionnés dans un plan à distance l'un de l'autre, dont les parties transversales **(26)** sont alignées en s'écartant l'une de l'autre, forment un double pied **(28,28')** avec une partie médiane **(23),** qui est insérée de préférence dans l'alignement des parties transversales **(26);**
b) pour l'assemblage d'un double pied **(28'),** la partie médiane **(23)** peut être munie à ses deux extrémités chaque fois d'une partie de pont **(8)** comme liaison en une zone de coin de la partie de pied **(20)** et de la partie transversale **(26)** du pied **(2)** respectivement associé; et
c) comme parties de l'entretoise **(3),** il est prévu des prolongements d'entretoise **(38)** et des parties de soutien **(27,27'),** qui ne présentent qu'à une extrémité le deuxième raccord **(25,275')** avec le bord **(250,270'),** l'espace creux **(251,271'),** les encoches **(252,272'),** le fond **(253,273')** et le filet intérieur **(254,274')** pour la fixation à une face latérale **(55)** sur le connecteur **(5).**

13. Construction de table selon l'une quelconque des revendications 1 à 12, **caractérisée en ce que**:
a) il est prévu des éléments de fixation **(29,29')** pour la fixation du plateau de table **(1)** sur le châssis inférieur;
b) les éléments de fixation **(29)** sont fixés au moyen de vis d'une part sur un côté supérieur des parties transversales **(26)** des pieds **(2)** ou des entretoises **(3)** et d'autre part sur le côté inférieur **(11,121)** du plateau de table **(1)** ou d'une tablette d'allonge **(12);** ou
c) des fentes **(260)** sont disposées sur les côtés supérieurs de parties transversales **(26),** d'entretoises **(3)** et de prolongements d'entretoise **(38)** pour l'assemblage entre les éléments de fixation **(29')** et les parties transversales **(26)** des pieds **(2)** et/ou les entretoises **(3)** et/ou les prolongements d'entretoise **(38),** fentes dans lesquelles des ergots **(290')** présents sur les éléments de fixation **(29')** peuvent être suspendus.

14. Construction de table selon l'une quelconque des revendications 1 à 13, **caractérisée en ce que**:
a) le plateau de table **(1)** présente un passage, dans lequel est disposé un accès de câblage **(14),** qui comporte des segments de volet à ouvrir **(141),** afin d'avoir accès aux supports de câble **(6)** et à une éventuelle unité de prises de courant;
b) sur l'accès de câblage **(14),** il se trouve des contours d'insertion **(140) -** par exemple des trous borgnes - pour y engager les organes d'arrêt **(150) -** par exemple des broches - d'un écran **(15)** apte à être posé sur le côté supérieur du plateau de table **(10)** et/ou de supports d'appareils, dans laquelle l'écran **(15)** protège le poste de travail et est en même temps utilisable pour installer de petits récipients, des supports pour des ustensiles et des appareils ou des pense-bêtes;
c) des supports de câbles **(6)** en forme de goulottes **(61),** de bandes, de filets **(62)** ou de crochets peuvent être disposés en dessous du plateau de table (1), qui peut être prolongé par des tablettes d'allonge **(12);** et
d) la construction de table peut être complétée par un recouvrement **(7)** dressé perpendiculairement, qui peut être fixé à des connecteurs **(5)** placés à l'extérieur.
